(19) Europäisches Patentamt
European Patent Office
Office européen des brevets

(11) **EP 3 438 173 B1**

(12) **EUROPEAN PATENT SPECIFICATION**

(45) Date of publication and mention
of the grant of the patent:
**29.12.2021 Bulletin 2021/52**

(51) Int Cl.:
**C08J 9/18** *(2006.01)*          **B29C 44/00** *(2006.01)*
**C08J 9/228** *(2006.01)*        **B29K 23/00** *(2006.01)*
**C08J 9/232** *(2006.01)*        *C08J 9/12* *(2006.01)*
**B29C 44/34** *(2006.01)*

(21) Application number: **17774113.9**

(22) Date of filing: **07.03.2017**

(86) International application number:
**PCT/JP2017/009012**

(87) International publication number:
**WO 2017/169568 (05.10.2017 Gazette 2017/40)**

(54) **PROCESS FOR PRODUCING EXPANDED POLYETHYLENE-BASED RESIN BEADS AND PROCESS FOR PRODUCING POLYETHYLENE-BASED MOLDED RESIN OBJECT BY IN-MOLD FOAMING**

VERFAHREN ZUR HERSTELLUNG VON EXPANDIERTEN HARZPERLEN AUF DER BASIS VON POLYETHYLEN UND VERFAHREN ZUR HERSTELLUNG VON POLYETHYLENBASIERTEN GUSSHARZARTIKELN DURCH IN-MOLD-GIESSEN

PROCÉDÉ DE PRODUCTION DE PERLES DE RÉSINE À BASE DE POLYÉTHYLÈNE EXPANSÉ ET PROCÉDÉ DE PRODUCTION D'UN OBJET EN RÉSINE MOULÉE À BASE DE POLYÉTHYLÈNE PAR MOUSSAGE DANS LE MOULE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.03.2016 JP 2016069331**

(43) Date of publication of application:
**06.02.2019 Bulletin 2019/06**

(73) Proprietor: **Kaneka Corporation**
**Osaka-shi, Osaka 530-8288 (JP)**

(72) Inventors:
• **HAYASE, Yuki**
  **Osaka 566-0072 (JP)**
• **YOSHIDA, Toru**
  **Osaka 566-0072 (JP)**

(74) Representative: **Vossius & Partner**
**Patentanwälte Rechtsanwälte mbB**
**Siebertstrasse 3**
**81675 München (DE)**

(56) References cited:
**WO-A1-2015/076306      JP-A- S4 985 158**
**JP-A- S6 284 853        JP-A- S56 151 736**
**JP-A- 2016 017 144      US-A- 3 953 558**
**US-A- 4 275 023         US-A- 4 366 263**

Remarks:
The file contains technical information submitted after the application was filed and not included in this specification

## Description

Technical Field

The present invention relates to a method for producing polyethylene-based resin foamed particles used for, e.g., returnable boxes, cushioning materials, cushioning packaging materials, or heat insulating materials, and a method for producing a polyethylene-based resin in-mold foam molded product by in-mold foam molding of the polyethylene-based resin foamed particles.

Background Art

Polyethylene-based resin foamed particles are formed into a polyethylene-based resin in-mold foam molded product when they are filled into a mold and subjected to in-mold foam molding (heat molding) with steam or the like. The polyethylene-based resin in-mold foam molded product thus obtained has the advantages of arbitrary shape, lightweight, heat insulating properties, etc.

Specific examples of the polyethylene-based resin in-mold foam molded product include a returnable box. In some cases, the returnable box needs to be washed after each use or washed for each predetermined number of times of use because the more frequently the returnable box is used, the more dirty or moldy it gradually becomes.

However, some polyethylene-based resin in-mold foam molded products absorb a considerable amount of water during washing. Therefore, these in-mold foam molded products may have the disadvantage of requiring more time for drying.

Patent Documents 1 to 3 and 13 disclose cross-linked polyethylene-based resin foamed particles. In particular, Patent Documents 1, 2, and 13 propose a cross-linked polyethylene-based resin in-mold foam molded product with a low water absorption rate.

Patent Documents 4 and 14 disclose a cross-linked polyethylene-based resin in-mold foam molded product that can be produced in a short molding cycle.

Patent Document 5 discloses a non-cross-linked polyethylene-based resin in-mold foam molded product formed of non-cross-linked polyethylene-based resin foamed particles having a specific melt flow index and a specific melt tension.

Patent Document 6 discloses non-cross-linked ethylene-based resin pre-foamed particles containing a non-cross-linked ethylene-based resin with a specific complex viscosity as a base resin.

Patent Documents 7 and 8 disclose non-cross-linked polyethylene-based resin pre-foamed particles containing a mixed resin composed of high-pressure-processed low-density polyethylene, linear low-density polyethylene, and linear high-density polyethylene.

Patent Document 9 discloses non-cross-linked polyethylene-based resin pre-foamed particles containing a base resin that is obtained by mixing linear low-density polyethylene-based resins with different resin densities.

Patent Documents 10 to 12 and 15 disclose a method for producing polyolefin-based resin foamed particles. The method includes mixing polyolefin-based resin particles, carbon dioxide as a foaming agent, and an aqueous medium, increasing the temperature of the mixture, and then releasing the mixture to a low pressure region.

Prior Art Documents

Patent Documents

Patent Document 1: JP S62(1987)-84853 A
Patent Document 2: JP S56(1981)-151736A
Patent Document 3: JP H4(1992)-372630 A
Patent Document 4: JP H8(1996)-92407 A
Patent Document 5: JP 2000-17079 A
Patent Document 6: JP H6(1994)-316645 A
Patent Document 7: WO 97/18260 A1
Patent Document 8: JP H9(1997)-25356 A
Patent Document 9: JP H11(1999)-172034 A
Patent Document 10: JP H5(1993)-156065 A

Patent Document 11: JP H6(1994)-192464 A
Patent Document 12: JP H6(1994)-200071 A
Patent Document 13: US 4 366 263 A
Patent Document 14: US 4 275 023 A
Patent Document 15: WO2015/076306 A1

Disclosure of Invention

Problem to be Solved by the Invention

However, the use of the cross-linked polyethylene-based resin foamed particles as disclosed in Patent Documents 1 to 3 results in a longer molding cycle of in-mold foam molding. The molding cycle in Patent Document 4 is still long and should be further shortened. Moreover, the use of the polyethylene-based resin foamed particles as disclosed in Patent Documents 5 to 12 can reduce the molding cycle of in-mold foam molding, but significantly increases water absorption, so that it takes a lot of time to dry their in-mold foam molded products after washing, as described above. Thus, there have been high expectations for the development of a polyethylene-based resin in-mold foam molded product with low water absorption properties and a short molding cycle, and polyethylene-based resin foamed particles constituting the polyethylene-based resin in-mold foam molded product.

The present invention has been made in view of the above problems and provides a method for producing polyethylene-based resin foamed particles that can be formed into a polyethylene-based resin in-mold foam molded product with low water absorption properties and a short molding cycle, and a method for producing a polyethylene-based resin in-mold foam molded product.

Means for Solving Problem

The present inventors conducted intensive studies to shorten the molding cycle while reducing the water absorption properties of a polyethylene-based resin in-mold foam molded product. As a result, the present inventors found out that polyethylene-based resin particles having specific viscoelastic properties and a specific melting point were foamed by first-step foaming in a particular foaming process to form polyethylene-based resin foamed particles, and the polyethylene-based resin foamed particles were used to provide a polyethylene-based resin in-mold foam molded product with low water absorption properties and a short molding cycle. Thus, the present invention was completed.

The present invention includes the following aspects.

[1] A method for producing polyethylene-based resin foamed particles by foaming polyethylene-based resin particles containing a polyethylene-based resin as a base resin, wherein the polyethylene-based resin particles are crosslinked by a cross-linking process, the crosslinked polyethylene-based resin particles have a melting point of 105°C or more and 125°C or less, and the polyethylene-based resin particles have a tan δ of 0.3 or more and 0.7 or less and a complex viscosity of 5000 Pa·s or more and 20000 Pa·s or less, which are determined by a viscoelasticity measurement at a temperature of 130°C and a frequency of 1.67 Hz,

the method including a first-step foaming process, the first-step foaming process including dispersing the polyethylene-based resin particles in an aqueous dispersing medium in a sealed vessel, adding a foaming agent containing carbon dioxide to an aqueous dispersion thus prepared, heating and pressurizing the aqueous dispersion, and then releasing the aqueous dispersion to a pressure region where pressure is lower than internal pressure of the sealed vessel, wherein a foaming ratio in the first-step foaming process is 10 times or more and 18 times or less.

[2] The method according to [1], wherein the tan δ is 0.4 or more and 0.6 or less and the complex viscosity is 6500 Pa·s or more and 12000 Pa·s or less, which are determined by the viscoelasticity measurement at a temperature of 130°C and a frequency of 1.67 Hz.

[3] The method according to [1] or [2], wherein the polyethylene-based resin particles are cross-linked by a cross-linking process.

[4] The method according to [3], wherein the cross-linking process uses a cross-linking agent to cross-link the polyethylene-based resin particles in the aqueous dispersing medium.

[5] The method according to [3] or [4], including the cross-linking process of the polyethylene-based resin particles before the first-step foaming process.

[6] The method according to any one of [3] to [5], wherein an absolute value of a difference in melting point between the polyethylene-based resin as the base resin of the polyethylene-based resin particles and the cross-linked polyethylene-based resin particles is 2°C or less.

[7] The method according to any one of [3] to [6], wherein the absolute value of the difference in melting point between the polyethylene-based resin as the base resin of the polyethylene-based resin particles and the cross-linked polyethylene-based resin particles is 1°C or less.

[8] The method according to any one of [1] to [7], wherein the polyethylene-based resin as the base resin of the polyethylene-based resin particles has a melt index of 0.2 g/10 min or more and less than 2.0 g/10 min.

[9] The method according to any one of [1] to [8], wherein the polyethylene-based resin as the base resin of the polyethylene-based resin particles has a density of 0.920 g/cm$^3$ or more and 0.932 g/cm$^3$ or less.

[10] The method according to any one of [1] to [9], wherein the polyethylene-based resin foamed particles have a melting point of 113°C or more and 117°C or less.

[11] The method according to any one of [1] to [10], including a second-step foaming process after the first-step foaming process, the second-step foaming process including placing the polyethylene-based resin foamed particles obtained by the first-step foaming process in a pressure vessel, impregnating the polyethylene-based resin foamed particles with inorganic gas containing at least one gas selected from the group consisting of air, nitrogen, and carbon dioxide to apply internal pressure, and then heating and further foaming the polyethylene-based resin foamed particles.

[12] A method for producing a polyethylene-based resin in-mold foam molded product, the method including: filling the polyethylene-based resin foamed particles obtained by the method according to any one of [1] to [11] into a mold; and molding the polyethylene-based resin foamed particles by in-mold foam molding.

[13] The method according to [12], including: placing the polyethylene-based resin foamed particles in a pressure vessel; impregnating the polyethylene-based resin foamed particles with inorganic gas containing at least one gas selected from the group consisting of air, nitrogen, and carbon dioxide to apply internal pressure, and then molding the polyethylene-based resin foamed particles by in-mold foam molding.

[14] The method according to [12] or [13], wherein the polyethylene-based resin in-mold foam molded product has a density of 20 g/L or more and 35 g/L or less and an amount of water absorption of 0.15 g/100 cm$^3$ or less.

[15] The method according to any one of [12] to [14], wherein the polyethylene-based resin in-mold foam molded product is a returnable box.

Effects of the Invention

A polyethylene-based resin in-mold foam molded product with low water absorption properties and a short molding cycle can easily be produced from the polyethylene-based resin foamed particles obtained by the production method of the present invention.

Brief Description of Drawing

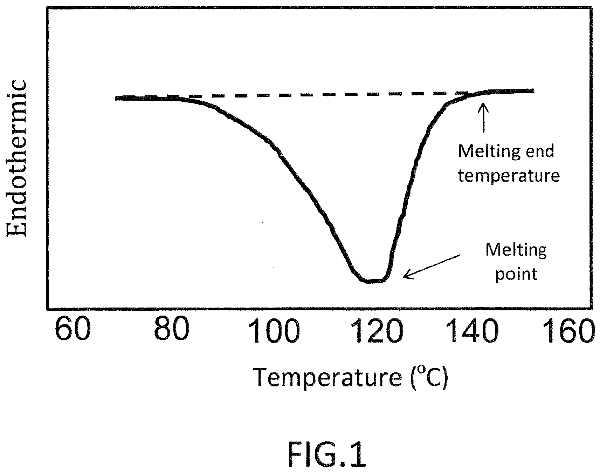

[FIG. 1] FIG. 1 is a graph showing an example of a DSC curve that is obtained by differential scanning calorimetry (DSC) to measure a melting point of polyethylene-based resin foamed particles of an embodiment of the present invention. Specifically, the DSC curve is obtained when the temperature of the polyethylene-based resin foamed particles is increased from 10°C to 190°C at a rate of 10°C/min, then reduced to 10°C at a rate of 10°C/min, and again increased to 190°C at a rate of 10°C/min, and the graph shows an example of the DSC curve during the second temperature rise. In FIG. 1, a melting point represents the peak temperature of the DSC curve. Moreover, a melting end temperature represents the temperature at which the edge of a melting peak curve during the second temperature rise returns to the position of a base line on the high temperature side.

Description of the Invention

In a method for producing polyethylene-based resin foamed particles of the present invention, polyethylene-based resin particles containing a polyethylene-based resin as a base resin are foamed to form polyethylene-based resin foamed particles. The polyethylene-based resin particles are crosslinked by a cross-linking process and the crosslinked polyethylene-based resin particles have a melting point of 105°C or more and 125°C or less. Moreover, the polyethylene-based resin particles have a tan $\delta$ (i.e., the ratio of a loss elastic modulus G2 to a storage elastic modulus G1 = G2/G1) of 0.3 or more and 0.7 or less and a complex viscosity of 5000 Pa·s or more and 20000 Pa·s or less, which are determined by a viscoelasticity measurement at a temperature of 130°C and a frequency of 1.67 Hz. The method for producing the polyethylene-based resin foamed particles of the present invention includes a first-step foaming process. The first-step foaming process includes dispersing the polyethylene-based resin particles in an aqueous dispersing medium in a sealed vessel, adding a foaming agent containing carbon dioxide to an aqueous dispersion thus prepared, heating and pressurizing the aqueous dispersion, and then releasing the aqueous dispersion to a pressure region where the pressure is lower than the internal pressure of the sealed vessel. A foaming ratio in the first-step foaming process is 10 times or more and 18 times or less. The polyethylene-based resin foamed particles obtained by the production method of an embodiment of the present invention can have the same melting point, tan δ, and complex viscosity as the polyethylene-based resin particles.

Embodiments of the present invention will be described below. However, the present invention is not limited to the following embodiments, and various modifications may be made to the embodiments within the scope as described herein. In the following description, the tan δ means a tan δ that is determined by the viscoelasticity measurement at a temperature of 130°C and a frequency of 1.67 Hz. The complex viscosity means a complex viscosity that is determined by the viscoelasticity measurement at a temperature of 130°C and a frequency of 1.67 Hz.

It is preferable that the polyethylene-based resin foamed particles obtained by the production method of an embodiment of the present invention have a tan δ of 0.3 to 0.7 and a complex viscosity of 5000 Pa·s to 20000 Pa·s. It is more preferable that the tan δ is 0.4 to 0.6 and the complex viscosity is 6500 Pa·s to 12000 Pa·s. It is further preferable that the tan δ is 0.45 to 0.58 and the complex viscosity is 6900 Pa·s to 11200 Pa·s.

If the tan δ of the polyethylene-based resin foamed particles is less than 0.3, the molding pressure during in-mold foam molding is likely to be high, and the water absorption properties of an in-mold foam molded product to be produced are likely to be increased. On the other hand, if the tan δ of the polyethylene-based resin foamed particles is more than 0.7, open cells are easily formed during first-step foaming and in-mold foam molding. This may increase the water absorption properties or make it difficult to perform the in-mold foam molding.

If the complex viscosity of the polyethylene-based resin foamed particles is less than 5000 Pa·s, the molding cycle of in-mold foam molding tends to be long. If the complex viscosity is more than 20000 Pa·s, the fusion (adhesion) between the polyethylene-based resin foamed particles during in-mold foam molding is reduced, so that the water absorption properties are likely to be increased.

In an embodiment of the present invention, the tan δ and the complex viscosity that are determined by the viscoelasticity measurement are the measured values at a temperature of 130°C and a frequency of 1.67 Hz. Specifically, the values are measured under the following conditions.

(a) Measurement mode: tension
(b) Distance between chucks: 10 mm
(c) Temperature rise conditions: 5°C/min
(d) Frequency: 1.67 Hz
(e) Distortion: 0.1%

A dynamic viscoelasticity measuring apparatus (DMA) used for the viscoelasticity measurement may be, e.g., DVA 200 manufactured by IT Keisoku Seigyo Co., Ltd.

As a sample for the viscoelasticity measurement, the resin materials such as the polyethylene-based resin foamed particles and the polyethylene-based resin particles may be melted and formed into a sheet-like material. Specifically, e.g., the polyethylene-based resin foamed particles or the polyethylene-based resin particles are laid on an iron plate as closely as possible. Another iron plate is disposed so that the particles are sandwiched between the iron plates. Then, the particles are kept in an atmosphere of 200°C for 30 minutes. Consequently, the polyethylene-based resin foamed particles or the polyethylene-based resin particles are melted and formed into a sheet-like material. The sheet-like material is cooled to produce a resin sheet with a thickness of about 0.3 mm to about 0.6 mm. Subsequently, a test piece of 18 mm (length) × 4 mm (width) × 0.3 mm to 0.6 mm (thickness) is cut out of the resin sheet. This test piece is used as a sample for the viscoelasticity measurement.

The melting point of the polyethylene-based resin foamed particles is preferably 105°C to 125°C, more preferably 107°C to 118°C, and particularly preferably 113°C to 117°C. If the melting point of the polyethylene-based resin foamed particles is less than 105°C, the compressive strength of an in-mold foam molded product is likely to be reduced. If the melting point of the polyethylene-based resin foamed particles is more than 125°C, the molding cycle tends to be long.

In an embodiment of the present invention, the melting point of the resin materials such as the polyethylene-based resin foamed particles and the polyethylene-based resin particles is a melting peak temperature during the second temperature rise of a DSC curve that is obtained when the temperature of 1 mg to 10 mg of the resin materials is increased from 10°C to 190°C at a rate of 10°C/min, then reduced to 10°C at a rate of 10°C/min, and again increased to 190°C at a rate of 10°C/min in differential scanning calorimetry (DSC) using a differential scanning calorimeter.

Other physical properties or the like of the polyethylene-based resin foamed particles obtained by the production method of an embodiment of the present invention will be described later.

Examples of the polyethylene-based resin as the base resin of the polyethylene-based resin particles for producing the polyethylene-based resin foamed particles include a low-density polyethylene-based resin, a medium-density polyethylene-based resin, and a linear low-density polyethylene-based resin. These polyethylene-based resins may be used individually or in combinations of two or more.

The melt index of the polyethylene-based resin is preferably 0.1 g/10 min or more and 5.0 g/10 min or less, and more preferably 0.2 g/10 mm or more and less than 2.0 g/10min. When the melt index of the polyethylene-based resin is 0.2 g/10 min or more and less than 2.0 g/10 min, polyethylene-based resin foamed particles with low water absorption properties, a short molding cycle (also referred to as a "short cycle" in the following), and a better balance between these properties are particularly likely to be produced.

In the present invention, unless otherwise specified, the melt index is a value measured according to JIS K 7210 under the condition that the temperature is 190°C and the load is 2.16 kg. The melt index is called a melt mass flow rate or simply called a melt flow rate. The melt index is expressed in g/10 min.

Among the above polyethylene-based resins, the low-density polyethylene-based resin and/or the linear low-density polyethylene-based resin are more preferred, and the low-density polyethylene-based resin is particularly preferred because the polyethylene-based resin foamed particles are likely to have lower water absorption properties, a shorter cycle, and a much better balance between these properties. Even if the low-density polyethylene-based resin is blended with other polyethylene-based resins, it is preferable that the low-density polyethylene-based resin accounts for at least 90% by weight of the blended resin (resin mixture) which is 100% by weight.

The melting point of the low-density polyethylene-based resin used in the present invention is 105°C to 125°C, and preferably 115°C to 120°C. Moreover, the density of the low-density polyethylene-based resin is preferably 0.920 g/cm$^3$ to 0.940 g/cm$^3$, and more preferably 0.920 g/cm$^3$ to 0.932 g/cm$^3$. Further, the melt index of the low-density polyethylene-based resin is preferably 0.1 g/10 min or more and 5.0 g/10 min or less, and more preferably 0.2 g/10 min or more and less than 2.0 g/10 min.

Such a low-density polyethylene-based resin is preferred because polyethylene-based resin foamed particles with low water absorption properties, a short cycle, and a better balance between these properties are likely to be produced, and particularly polyethylene-based resin foamed particles with the above viscoelastic properties are likely to be produced by performing a cross-linking process, as will be described later.

The polyethylene-based resins (including, e.g., the low-density polyethylene-based resin, the medium-density polyethylene-based resin, and the linear low-density polyethylene-based resin) may be either ethylene homopolymers or copolymers of ethylene and other comonomers copolymerizable with ethylene. The comonomers copolymerizable with ethylene may be α-olefins with a carbon number of 3 to 18 and may include, e.g., propylene, 1-butene, 1-pentene, 1-hexene, 3,3-dimethyl-1-butene, 4-methyl-1-pentene, 4,4-dimethyl-1-pentene, and 1-octene. These comonomers may be used individually or in combinations of two or more.

When the low-density polyethylene-based resin is a copolymer, it is preferable that about 1% by weight to about 12% by weight of the comonomer copolymerizable with ethylene is used for the copolymerization so that the density of the copolymer falls in the above range.

The polyethylene-based resin particles may contain various additives to the extent that they do not impair the object of the present invention, in addition to the polyethylene-based resin as the base resin. Examples of such additives include an inorganic substance, a hydrophilic compound, an antistatic agent, a colorant, a flame retardant, a phosphorus antioxidant and a phenol antioxidant (which are stabilizers), and a compatibilizer. In this case, the polyethylene-based resin particles to be produced also contain various additives such as an inorganic substance, a hydrophilic compound, an antistatic agent, a colorant, a flame retardant, a phosphorus antioxidant and a phenol antioxidant (which are stabilizers), and a compatibilizer to the extent that they do not impair the object of the present invention.

The polyethylene-based resin particles containing an inorganic substance are expected to be effective in, e.g., adjusting the average cell diameter of the polyethylene-based resin foamed particles, making the cells uniform, or increasing the foaming ratio. The inorganic substance is not particularly limited. Examples of the inorganic substance include the following: talc; hydrotalcite; calcium carbonate; silica; kaolin; barium sulfate; calcium hydroxide; aluminum hydroxide; aluminum oxide; titanium oxide; zeolite; zinc borate; and magnesium borate. These inorganic substances may be used individually or in combinations of two or more.

Among the above inorganic substances, talc is preferred in terms of the effect of adjusting the average cell diameter of the polyethylene-based resin foamed particles, the effect of making the cells uniform, and the effect of increasing the foaming ratio.

The amount of the inorganic substance added may be appropriately adjusted in accordance with, e.g., the type of the inorganic substance and the level of expected effect. For example, the amount of the inorganic substance added is preferably 0.001 parts by weight to 5 parts by weight, more preferably 0.01 parts by weight to 3 parts by weight, and particularly preferably 0.05 parts by weight to 1 part by weight with respect to 100 parts by weight of the polyethylene-based resin. When the amount of the inorganic substance falls in the above range, polyethylene-based resin foamed particles having a uniform cell diameter are likely to be produced without impairing the low water absorption properties and short cycle performance of an in-mold foam molded product. Moreover, the in-mold foam molded product is likely to have an aesthetically pleasing surface.

The polyethylene-based resin particles containing a hydrophilic compound are expected to increase the foaming ratio and the aesthetic quality of the surface of an in-mold foam molded product. Examples of the hydrophilic compound include the following: glycerol; polyethylene glycol; 1,2,4-butanetriol; diglycerol; pentaerythritol; trimethylolpropane; sorbitol; D-mannitol; erythritol; hexanetriol; xylitol; D-xylose; inositol; fructose; galactose; glucose; mannose; aliphatic alcohol with a carbon number of 10 to 25; glycerol ester of fatty acid with a carbon number of 10 to 25; melamine; isocyanuric acid; and melamine-isocyanuric acid condensation product. These hydrophilic compounds may be used individually or in combinations of two or more.

Among the above hydrophilic compounds, glycerol and/or polyethylene glycol are more preferred in terms of increasing the foaming ratio and the aesthetic quality of the surface.

The amount of the hydrophilic compound added may be appropriately adjusted in accordance with, e.g., the type of the hydrophilic compound and the level of expected effect. For example, the amount of the hydrophilic compound added is preferably 0.001 parts by weight to 1 part by weight, more preferably 0.01 parts by weight to 0.5 parts by weight, and particularly preferably 0.05 parts by weight to 0.3 parts by weight with respect to 100 parts by weight of the polyethylene-based resin. When the amount of the hydrophilic compound falls in the above range, the foaming ratio is likely to be increased and an in-mold foam molded product having an aesthetically pleasing surface is likely to be produced without impairing the low water absorption properties and short cycle performance of the in-mold foam molded product.

Examples of the colorant include the following: inorganic pigments such as carbon black, Ketjen black, iron black, cadmium yellow, cadmium red, cobalt violet, cobalt blue, iron blue, ultramarine blue, chrome yellow, zinc yellow, and barium yellow; and organic pigments such as a perylene pigment, a polyazo pigment, a quinacridone pigment, a phthalocyanine pigment, a perinone pigment, an anthraquinone pigment, a thioindigo pigment, a dioxazine pigment, an isoindolinone pigment, and a quinophthalone pigment.

To produce the polyethylene-based resin foamed particles of the present invention, first, the polyethylene-based resin particles containing the polyethylene-based resin as the base resin are preferably produced. The polyethylene-based resin particles having a tan $\delta$ of 0.3 to 0.7 and a complex viscosity of 5000 Pa·s to 20000 Pa·s may be produced by, e.g., increasing the molecular weight of the polyethylene-based resin as the base resin or introducing a branched structure or a cross-linked structure. Moreover, the process of forming the polyethylene-based resin particles may include a cross-linking process to produce cross-linked polyethylene-based resin particles. The use of the polyethylene-based resin particles with the above viscoelastic properties can provide the polyethylene-based resin foamed particles having the same viscoelastic properties.

The method for producing the polyethylene-based resin particles may use, e.g., an extruder. Specifically, e.g., the polyethylene-based resin is optionally blended with additives such as an inorganic substance, a hydrophilic compound, and an antioxidant. This mixture is placed in an extruder, where it is melted and kneaded. Then, the mixture is forced through a die, cooled, and cut into particles with a cutter. Alternatively, e.g., the polyethylene-based resin is blended with some of the additives. This mixture is placed in an extruder, where it is melted and kneaded. Then, the mixture is forced through a die, cooled, and cut into resin pellets with a cutter. The resin pellets are again blended with the residual additives. The resulting mixture is placed in an extruder, where it is melted and kneaded. Then, the mixture is forced through a die, cooled, and cut into particles with a cutter. In this case, the additives and the polyethylene-based resin or the like may be previously melted and kneaded to prepare a masterbatch, and the masterbatch may be used for extrusion. As will be described later, when the polyethylene-based resin is cross-linked with a cross-linking agent to form the polyethylene-based resin particles in an extruder, the following cross-linking agents may be used as additives.

The resin temperature during melting and kneading in the extruder is not particularly limited and may be preferably 250°C to 320°C. This is because the resin temperature in the above range can increase the productivity and suppress the degradation of the resin due to thermal hysteresis in the extrusion, i.e., suppress a significant change in melt index or the like before and after the extrusion.

Each of the polyethylene-based resin particles thus obtained has a length L in the extrusion direction and an arithmetic mean value D of the maximum diameter of the cut surface and the diameter in the direction perpendicular to the maximum diameter. The L/D ratio (i.e., the ratio of the length L to the arithmetic mean value D) is not particularly limited and may be preferably about 1.0 to about 5.0. For example, the L/D ratio may be appropriately adjusted so that the (cross-linked) polyethylene-based resin foamed particles have a shape close to a true sphere as much as possible.

The weight per particle of the polyethylene-based resin particles is not particularly limited and may be preferably about 0.2 mg/particle to about 10 mg/particle. In terms of low water absorption properties, the weight per particle of the polyethylene-based resin particles is more preferably 0.5 mg/particle to 3 mg/particle. In an embodiment of the present invention, the weight per particle of the polyethylene-based resin particles is the average weight of the resin particles, which is calculated based on the weight of 100 polyethylene-based resin particles that are randomly selected.

The melt index of the polyethylene-based resin particles is preferably 0.1 g/10 min or more and 5.0 g/10 min or less, and more preferably 0.2 g/10 min or more and less than 2.0 g/10 min.

These polyethylene-based resin particles are preferred because a polyethylene-based resin in-mold foam molded product with low water absorption properties and a short molding cycle is likely to be produced, and particularly polyethylene-based resin foamed particles with the above viscoelastic properties are likely to be produced by performing a cross-linking process, as will be described later.

When the polyethylene-based resin particles are subjected to a particular first-step foaming process (as will be described later), the polyethylene-based resin foamed particles with specific viscoelastic properties can be produced. In the present invention, it is preferable that the polyethylene-based resin particles are subjected to a cross-linking process before the first-step foaming process. The cross-linking process facilitates the production of the polyethylene-based resin particles with the above viscoelastic properties. Then, the polyethylene-based resin particles thus obtained are subjected to the first-step foaming process, so that the polyethylene-based resin foamed particles having the same viscoelastic properties are likely to be produced.

The polyethylene-based resin particles may be cross-linked by, e.g., any of the following methods: a method for cross-linking the polyethylene-based resin particles with a cross-linking agent in an aqueous dispersing medium; a method for cross-linking the polyethylene-based resin particles with a cross-linking agent in an extruder; and a method for cross-linking the polyethylene-based resin particles with an electron beam or the like. In an embodiment of the present invention, the method for cross-linking the polyethylene-based resin particles with a cross-linking agent in an aqueous dispersing medium is preferably used.

The method for cross-linking the polyethylene-based resin particles with a cross-linking agent in an aqueous dispersing medium is not particularly limited and may be performed as follows.

The polyethylene-based resin particles, the aqueous dispersing medium, and the cross-linking agent are placed in a pressure resistant sealed vessel and mixed while stirring. In this case, a dispersing agent and a dispersing aid may be added as needed to prevent blocking between the polyethylene-based resin particles.

The inside of the pressure resistant sealed vessel is replaced with nitrogen. Then, the temperature in the sealed vessel is increased to a predetermined temperature (cross-linking temperature). This temperature is maintained for a predetermined time (cross-linking time). Subsequently, the sealed vessel is cooled, thereby providing the polyethylene-based resin particles that have been cross-linked (also referred to as "cross-linked polyethylene-based resin particles" in the following).

The cross-linking temperature and the cross-linking time may be appropriately adjusted in accordance with, e.g., the polyethylene-based resin particles used, the type of the cross-linking agent, and the intended degree of cross-linking. For example, the cross-linking temperature is preferably 120°C to 180°C and the cross-linking time is preferably 10 minutes to 120 minutes.

The aqueous dispersing medium is not particularly limited as long as the polyethylene-based resin particles are not dissolved in it, and may be preferably water.

Examples of the cross-linking agent include organic peroxides such as dicumyl peroxide, 2,5-dimethyl-2,5-di(t-butylperoxy)hexane, 1,1-bis(t-butylperoxy)3,3,5-trimethylcyclohexane, n-butyl-4,4-bis(t-butylperoxy)valerate, t-butylcumylperoxide, and t-butylperoxybenzoate.

Among the above cross-linking agents, dicumyl peroxide and/or t-butylperoxybenzoate are preferred because they can be safely stored even at room temperature, and dicumyl peroxide is more preferred because the cross-linking efficiency is high.

The amount of the cross-linking agent used may be appropriately adjusted in accordance with, e.g., the type of the cross-linking agent to obtain the polyethylene-based resin particles with the above viscoelastic properties. The amount of the cross-linking agent used is preferably 0.001 parts by weight to 1.0 part by weight, more preferably 0.01 parts by weight to 1.0 part by weight, and particularly preferably 0.05 parts by weight to 0.8 parts by weight with respect to 100 parts by weight of the polyethylene-based resin. When the amount of the cross-linking agent falls in the above range, polyethylene-based resin foamed particles and an in-mold foam molded product with low water absorption properties and short cycle performance are likely to be produced.

Examples of the dispersing agent include inorganic dispersing agents such as tricalcium phosphate, trimagnesium phosphate, basic magnesium carbonate, calcium carbonate, barium sulfate, kaoline, talc, and clay. These dispersing agents may be used individually or in combinations of two or more.

Examples of the dispersing aid include the following: carboxylate-type anionic surfactants such as N-acyl amino acid salt, alkyl ether carboxylate, and acylated peptide; sulfonate-type anionic surfactants such as alkyl sulfonate, n-paraffin sulfonate, alkyl benzene sulfonate, alkyl naphthalene sulfonate, and sulfosuccinate; sulfate-type anionic surfactants such as sulfonated oil, alkyl sulfate, alkyl ether sulfate, and alkyl amide sulfate; and phosphate-type anionic surfactants such as alkyl phosphate, polyoxyethylene phosphate, and alkyl allyl ether sulfate. Moreover, examples of the dispersing aid also include polycarboxylic acid-type high molecular surfactants such as maleic acid copolymer salt and polyacrylate, and polyvalent anionic high molecular surfactants such as polystyrene sulfonate and naphthalenesulfonic acid formalin condensate. In the above dispersing aids, the type of salt is not particularly limited and may be, e.g., sodium salt, potassium salt, or lithium salt. These dispersing aids may be used individually or in combinations of two or more.

Among the above dispersing agents and dispersing aids, it is preferable that at least one dispersing agent selected from the group consisting of tricalcium phosphate, trimagnesium phosphate, barium sulfate, and kaoline is used in combination with sodium n-paraffin sulfonate as a dispersing aid.

The amounts of the dispersing agent and the dispersing aid used vary depending on their types and the type and amount of the polyethylene-based resin particles to be used. In general, it is preferable that 0.1 parts by weight to 3 parts by weight of the dispersing agent is added to 100 parts by weight of the aqueous dispersing medium, and 0.001 parts by weight to 0.1 parts by weight of the dispersing aid is added to 100 parts by weight of the aqueous dispersing medium.

It is preferable that 20 parts by weight to 100 parts by weight of the polyethylene-based resin particles are generally added to 100 parts by weight of the aqueous dispersing medium to improve the dispersibility in the aqueous dispersing medium.

In the method for cross-linking the polyethylene-based resin particles with a cross-linking agent in an aqueous dispersing medium, the polyethylene-based resin as the base resin of the polyethylene-based resin particles preferably has a melt index of 0.2 g/10 min or more and less than 2.0 g/10 min. In this case, cross-linked polyethylene-based resin foamed particles with low water absorption properties and short cycle performance are likely to be produced.

On the other hand, the flowability of the cross-linked polyethylene-based resin particles is reduced due to cross-linking. Therefore, it is difficult to measure a melt index according to JIS K 7210 under the condition that the temperature is 190°C and the load is 2.16 kg, as described above.

In an embodiment of the present invention, the melting point of the cross-linked polyethylene-based resin particles can be measured in the above manner. The melting point of the cross-linked polyethylene-based resin particles is 105°C to 125°C. In this case, the cross-linked polyethylene-based resin foamed particles are likely to have a melting point of 105°C to 125°C.

In the present invention, the absolute value of the difference in melting point between the polyethylene-based resin as the base resin of the polyethylene-based resin particles and the cross-linked polyethylene-based resin particles is preferably 2°C or less, and more preferably 1°C or less. Although the reason for this is not clear, when the absolute value of the difference in melting point falls in the above range, cross-linked polyethylene-based resin foamed particles with low water absorption properties and short cycle performance are likely to be produced. In the present invention, the melting point of the polyethylene-based resin as the base resin may be higher than that of the cross-linked polyethylene-based resin particles, and vice versa. It is preferable that the polyethylene-based resin as the base resin has a higher melting point than the cross-linked polyethylene-based resin particles.

When the polyethylene-based resin particles are cross-linked with a cross-linking agent in an aqueous dispersing medium, the cross-linked polyethylene-based resin particles have a shape close to a true sphere. Consequently, the cross-linked polyethylene-based resin foamed particles, which have been produced by foaming the cross-linked polyethylene-based resin particles, also have a shape close to a true sphere. Thus, this aspect is preferred in terms of the filling properties during in-mold foam molding.

In an embodiment of the present invention, the polyethylene-based resin foamed particles obtained after the cross-linking process (also referred to as "cross-linked polyethylene-based resin foamed particles" in the following) are preferably used in terms of low water absorption properties and short cycle performance.

In particular, when the cross-linked polyethylene-based resin foamed particles are produced by using the low-density polyethylene-based resin as the polyethylene-based resin, they are likely to have the above viscoelastic properties.

The polyethylene-based resin particles having a specific melting point and specific viscoelastic properties are subjected to a particular first-step foaming process (as will be described in detail later), so that polyethylene-based resin foamed particles with low water absorption properties and short cycle performance can be produced.

In an embodiment of the present invention, the first-step foaming process is performed as follows. First, the polyethylene-based resin particles containing the polyethylene-based resin as the base resin are dispersed in an aqueous dispersing medium in a sealed vessel. Then, a foaming agent containing carbon dioxide is added to the aqueous dispersion thus prepared. This aqueous dispersion is heated, pressurized, and then released to a pressure region where the pressure is lower than the internal pressure of the sealed vessel. Thus, the polyethylene-based resin particles are foamed to form polyethylene-based resin foamed particles.

In the first-step foaming process, the foaming ratio is 10 times to 18 times. This first-step foaming process using the polyethylene-based resin particles having the above melting point and viscoelastic properties can produce the polyethylene-based resin foamed particles with low water absorption properties and short cycle performance. If the foaming ratio in the first-step foaming process is less than 10 times, the amount of water absorption of the polyethylene-based resin foamed particles and the polyethylene-based resin in-mold foam molded product is increased. On the other hand, if the foaming ratio in the first-step foaming process is more than 18 times, the molding cycle of the polyethylene-based resin in-mold foam molded product becomes longer. In terms of low water absorption properties and short cycle performance, the foaming ratio in the first-step foaming process is preferably 11 times to 17 times, and more preferably 12 times to 17 times. The foaming ratio in the first-step foaming process can be confirmed by measuring a foaming ratio of first-step foamed particles, as will be described later.

Specifically, in the first-step foaming process, e.g., the polyethylene-based resin particles and the aqueous dispersing medium, and optionally a dispersing agent or the like, are placed in the sealed vessel, and then the pressure in the sealed vessel is reduced (i.e., the sealed vessel is vacuumized) as needed. Subsequently, the foaming agent containing carbon dioxide is introduced to the sealed vessel until the pressure in the sealed vessel reaches 1 MPa (gage pressure) or more and 2 MPa (gage pressure) or less. Thereafter, the aqueous dispersion is heated to a temperature not less than the softening temperature of the polyethylene-based resin. The pressure in the sealed vessel is raised to about 1.5 MPa (gage pressure) or more and about 5 MPa (gage pressure) or less by heating. After heating, if necessary, the foaming agent containing carbon dioxide is further added to adjust the pressure in the sealed vessel to desired foaming pressure. Moreover, the temperature in the sealed vessel is maintained (held) for more than 0 minutes and 120 minutes or less while the temperature is finely adjusted to a foaming temperature. Next, the polyethylene-based resin particles that have been impregnated with the foaming agent are released to a collection vessel that is a pressure region where the pressure (generally atmospheric pressure) is lower than the internal pressure of the sealed vessel. Thus, the polyethylene-based resin foamed particles are produced.

The pressure in the collection vessel for collecting the polyethylene-based resin foamed particles may be lower than the pressure in the sealed vessel. In general, a part of the collection vessel may be open to the atmosphere so that the collection vessel is under atmospheric pressure. Setting the pressure in the collection vessel to atmospheric pressure eliminates the need for complicated pressure control equipment, and therefore is preferred.

There is another preferred aspect to increase the foaming ratio of the polyethylene-based resin foamed particles. For example, a hot water shower or steam is blown into the collection vessel, where the polyethylene-based resin foamed particles are released and brought into contact with hot water or steam. In this case, the temperature in the collection vessel is preferably 60°C to 120°C, and more preferably 90°C to 110°C.

In the present invention, the foaming agent may be introduced by any method other than the above. For example, the polyethylene-based resin particles and the aqueous dispersing medium, and optionally a dispersing agent or the like, are placed in the sealed vessel, and then the sealed vessel is vacuumized as need. Subsequently, the foaming agent may be introduced to the sealed vessel while the aqueous dispersion is heated to a temperature not less than the softening temperature of the polyethylene-based resin. Alternatively, e.g., the polyethylene-based resin particles and the aqueous dispersing medium, and optionally a dispersing agent or the like, are placed in the sealed vessel, and then heated to near the foaming temperature, at which the foaming agent may be introduced. Thus, there is no particular limitation to the specific method for introducing the foaming agent to the dispersion system including the polyethylene-based resin particles and the aqueous dispersing medium, and optionally a dispersing agent or the like.

The foaming ratio and average cell diameter of the polyethylene-based resin foamed particles may be adjusted in the following manner. For example, carbon dioxide, nitrogen, air, or a material used as the foaming agent is injected into the sealed vessel before the aqueous dispersion is released to a low pressure region. This raises the internal pressure of the sealed vessel and adjusts the pressure release rate for foaming. Moreover, the pressure in the sealed vessel is controlled when carbon dioxide, nitrogen, air, or a material used as the foaming agent is injected into the sealed vessel not only before but also during the release of the aqueous dispersion to the low pressure region. The foaming ratio and the average cell diameter can also be adjusted by appropriately changing the temperature (approximately the foaming temperature) in the sealed vessel before the release of the aqueous dispersion to the low pressure region.

The temperature (foaming temperature) in the sealed vessel before the release of the aqueous dispersion to the low pressure region may be a temperature not less than the softening temperature of the polyethylene-based resin particles. In general, using the melting point [Tm (°C)] of the polyethylene-based resin particles as a reference, the foaming temperature is preferably in the range of Tm - 5 (°C) to Tm + 40 (°C), and more preferably in the range of Tm + 5 (°C) to Tm + 25 (°C).

In an embodiment of the present invention, the melting point of the polyethylene-based resin or the melting point Tm of the polyethylene-based resin particles is a melting peak temperature during the second temperature rise of a DSC curve that is obtained when the temperature of 1 mg to 10 mg of the polyethylene-based resin or the polyethylene-based resin particles is increased from 10°C to 190°C at a rate of 10°C/min, then reduced to 10°C at a rate of 10°C/min, and again increased to 190°C at a rate of 10°C/min in differential scanning calorimetry (DSC) using a differential scanning calorimeter. Moreover, the melting end temperature represents the temperature at which the edge of a melting peak curve during the second temperature rise returns to the position of the base line on the high temperature side. The melting point of the polyethylene-based resin foamed particles can be measured in the same manner.

The length of time that the temperature in the sealed vessel is maintained (held) (which may be referred to as "holding time" in the following) is preferably more than 0 minutes and 120 minutes or less, more preferably 2 minutes or more and 60 minutes or less, and further preferably 10 minutes or more and 40 minutes or less.

The sealed vessel in which the polyethylene-based resin particles are dispersed is not particularly limited as long as it can withstand the internal pressure and temperature of the vessel during the production of the foamed particles. Specifically, e.g., an autoclave-type pressure vessel may be used.

The foaming agent used in the present invention may be a foaming agent containing carbon dioxide. In addition to carbon dioxide, examples of the foaming agent include the following: saturated hydrocarbons such as propane, butane, and pentane; ethers such as dimethyl ether; alcohols such as methanol and ethanol; and inorganic gas such as air, nitrogen, and water vapor (water). These foaming agents may be used individually or in combinations of two or more.

Among the above foaming agents, a foaming agent containing only carbon dioxide or a foaming agent containing carbon dioxide and water vapor (water) is more preferred because the environmental load is particularly small and there is no danger of burning.

The aqueous dispersing medium is preferably only water. A dispersing medium obtained by adding, e.g., methanol, ethanol, ethylene glycol, or glycerol to water can also be used. When the polyethylene-based resin particles contain a hydrophilic compound, water in the aqueous dispersing medium also serves as a foaming agent and contributes to an increase in the foaming ratio.

It is more preferable that a dispersing agent is added to the aqueous dispersing medium to prevent blocking between the polyethylene-based resin particles. Examples of the dispersing agent include inorganic dispersing agents such as tricalcium phosphate, trimagnesium phosphate, basic magnesium carbonate, calcium carbonate, barium sulfate, kaoline, talc, and clay. These dispersing agents may be used individually or in combinations of two or more.

Moreover, it is preferable that a dispersing aid is used with the dispersing agent. Examples of the dispersing aid include the following: carboxylate-type anionic surfactants such as N-acyl amino acid salt, alkyl ether carboxylate, and acylated peptide; sulfonate-type anionic surfactants such as alkyl sulfonate, n-paraffin sulfonate, alkyl benzene sulfonate, alkyl naphthalene sulfonate, and sulfosuccinate; sulfate-type anionic surfactants such as sulfonated oil, alkyl sulfate, alkyl ether sulfate, and alkyl amide sulfate; and phosphate-type anionic surfactants such as alkyl phosphate, polyoxyethylene phosphate, and alkyl allyl ether sulfate. Moreover, examples of the dispersing aid also include polycarboxylic acid-type high molecular surfactants such as maleic acid copolymer salt and polyacrylate, and polyvalent anionic high molecular surfactants such as polystyrene sulfonate and naphthalenesulfonic acid formalin condensate. In the above dispersing aids, the type of salt is not particularly limited and may be, e.g., sodium salt, potassium salt, or lithium salt. These dispersing aids may be used individually or in combinations of two or more.

Among the above dispersing agents and dispersing aids, it is preferable that at least one dispersing agent selected from the group consisting of tricalcium phosphate, trimagnesium phosphate, barium sulfate, and kaoline is used in combination with sodium n-paraffin sulfonate as a dispersing aid.

The amounts of the dispersing agent and the dispersing aid used vary depending on their types and the type and amount of the polyethylene-based resin particles to be used. In general, it is preferable that 0.1 parts by weight to 3 parts by weight of the dispersing agent is added to 100 parts by weight of the aqueous dispersing medium, and 0.001 parts by weight to 0.1 parts by weight of the dispersing aid is added to 100 parts by weight of the aqueous dispersing medium.

It is preferable that 20 parts by weight to 100 parts by weight of the polyethylene-based resin particles are generally added to 100 parts by weight of the aqueous dispersing medium to improve the dispersibility in the aqueous dispersing medium.

In the present invention, when the polyethylene-based resin particles are cross-linked with a cross-linking agent in an aqueous dispersing medium before the first-step foaming process, the cross-linked polyethylene-based resin particles may be temporarily taken out of the pressure resistant sealed vessel after the cross-linking process is finished. Then, the cross-linked polyethylene-based resin particles may be separately placed in a pressure resistant sealed vessel for the first-step foaming process. Thus, the cross-linked polyethylene-based resin foamed particles can be produced in the above manner.

On the other hand, the cross-linked polyethylene-based resin particles may not be taken out of the pressure resistant sealed vessel after the cross-linking process is finished. In such a case, the foaming agent containing carbon dioxide is added to this pressure resistant sealed vessel, and the cross-linked polyethylene-based resin particles are heated, pressurized, and then released to a pressure region where the pressure is lower than the internal pressure of the sealed vessel. Thus, the cross-linked polyethylene-based resin foamed particles can be produced.

The polyethylene-based resin foamed particles obtained by foaming the polyethylene-based resin particles in the first-step foaming process may be referred to as "first-step foamed particles." Moreover, the first-step foamed particles may be impregnated with inorganic gas (e.g., air, nitrogen, or carbon dioxide) to apply internal pressure, and then brought into contact with steam at predetermined pressure. In this manner, the polyethylene-based resin foamed particles having a higher foaming ratio than the first-step foamed particles can be produced. As described above, when the polyethylene-based resin foamed particles, i.e., the first-step foamed particles are further foamed to produce the polyethylene-based resin foamed particles with a higher foaming ratio, this foaming process may be referred to as a "second-step foaming process" in the present invention. The polyethylene-based resin foamed particles obtained after the second-step foaming process may be referred to as "second-step foamed particles."

Specifically, the second-step foaming process is performed as follows. The polyethylene-based resin foamed particles obtained by the first-step foaming process are placed in a pressure vessel and impregnated with inorganic gas containing, e.g., at least one gas selected from the group consisting of air, nitrogen, and carbon dioxide to apply internal pressure. Then, the polyethylene-based resin foamed particles are heated and further foamed.

The second-step foaming process may use any heating methods such as steam heating and electric heating.

The steam heating is preferred in terms of, e.g., simplification of the process, ease of handling, and safety.

When the polyethylene-based resin foamed particles are heated by steam, the pressure of the steam is adjusted preferably in the range of 0.005 MPa (gage pressure) to 0.15 MPa (gage pressure), and more preferably in the range of 0.01 MPa (gate pressure) to 0.1 MPa (gage pressure) in view of the foaming ratio of the second-step foamed particles.

It is desirable that the internal pressure of the inorganic gas with which the first-step foamed particles are impregnated is appropriately changed in view of, e.g., the foaming ratio of the second-step foamed particles. The internal pressure of the inorganic gas is preferably 0.1 MPa (absolute pressure) to 0.6 MPa (absolute pressure).

In an embodiment of the present invention, the foaming ratio of the polyethylene-based resin foamed particles after the second-step foaming process is preferably 11 times to 60 times, more preferably 15 times to 50 times, further preferably 20 times to 45 times, and particularly preferably 20 times to 35 times in terms of low water absorption properties and short cycle performance.

In an embodiment of the present invention, the foaming ratio of the polyethylene-based resin foamed particles is determined in the following manner. First, a weight w (g) of the polyethylene-based resin foamed particles is measured. Then, the polyethylene-based resin foamed particles are immersed in ethanol contained in a graduated cylinder, and a volume v ($cm^3$) of the polyethylene-based resin foamed particles is measured based on an increase in liquid level of the graduated cylinder (water immersion method). Subsequently, a true specific gravity pb (= w/v) of the polyethylene-based resin foamed particles is calculated. The foaming ratio is a ratio (pr /pb) of the density $\rho r$ ($g/cm^3$) of the polyethylene-based resin or the polyethylene-based resin particles before foaming to the true specific gravity pb of the polyethylene-based resin foamed particles. In this case, the density $\rho r$ can also be calculated by the water immersion method. The foaming ratios of both the first-step foamed particles and the second-step foamed particles can be measured as described above.

The average cell diameter of the polyethylene-based resin foamed particles is preferably 180 $\mu$m to 450 $\mu$m, and more preferably 200 $\mu$m to 400 $\mu$m. When the average cell diameter is 180 $\mu$m or more, there is no possibility that wrinkles will be formed on the surface of a polyethylene-based resin in-mold foam molded product during in-mold foam molding. When the average cell diameter is 450 $\mu$m or less, there is no possibility that the shock-absorbing properties of a polyethylene-based resin in-mold foam molded product will be reduced.

In an embodiment of the present invention, the open-cell content of the polyethylene-based resin foamed particles is preferably 12% or less, more preferably 10% or less, and particularly preferably 6% or less. If the open-cell content is more than 12%, shrinkage occurs during in-mold foam molding, which may reduce the surface smoothness and compressive strength of a polyethylene-based resin in-mold foam molded product. In some cases, the in-mold foam molding cannot be performed.

The polyethylene-based resin foamed particles thus obtained can be formed into a polyethylene-based resin in-mold foam molded product by, e.g., known in-mold foam molding.

There is no particular limitation to the specific method for forming a polyethylene-based resin in-mold foam molded product by in-mold foam molding. Examples of the molding method include the following:

(I) The polyethylene-based resin foamed particles are placed in a pressure vessel and impregnated with inorganic gas containing at least one gas selected from the group consisting of air, nitrogen, and carbon dioxide to apply internal pressure. Then, the polyethylene-based resin foamed particles are filled into a mold, and heated and fused by steam;

(II) The polyethylene-based resin foamed particles are compressed by the pressure of inorganic gas and filled into a mold. Then, the polyethylene-based resin foamed particles are heated and fused by steam with the use of restoring force of the polyethylene-based resin foamed particles; and

(III) The polyethylene-based resin foamed particles are filled into a mold without any particular pretreatment, and heated and fused by steam. Among them, the method (I) is preferred in terms of low water absorption properties.

The molding conditions such as molding pressure of in-mold foam molding are not particularly limited and may be appropriately adjusted in accordance with, e.g., known general conditions so that the polyethylene-based resin foamed particles can be molded.

The density of the polyethylene-based resin in-mold foam molded product of the present invention may be appropriately set in accordance with, e.g., the foaming ratio of the polyethylene-based resin foamed particles or the strength required for the polyethylene-based resin in-mold foam molded product. In general, the density of the polyethylene-based resin in-mold foam molded product is preferably 10 g/L to 100 g/L, more preferably 14 g/L to 50 g/L, and particularly preferably 20 g/L to 35 g/L. In this case, the polyethylene-based resin in-mold foam molded product is likely to have low water absorption properties and short cycle performance, while exhibiting sufficient shock-absorbing properties, which are remarkable properties of the polyethylene-based resin in-mold foam molded product. In particular, the polyethylene-based resin in-mold foam molded product is likely to have low water absorption properties such as an amount of water absorption of 0.15 g/100 $cm^3$ or less. Moreover, the polyethylene-based resin in-mold foam molded product is likely to have short cycle performance such as a molding cycle of 200 seconds or less. The amount of water absorption and molding cycle of the polyethylene-based resin in-mold foam molded product can be measured, as will be described later.

Examples

Hereinafter, the present invention will be described in more detail by way of examples and comparative examples. However, the present invention is not limited to the following examples. The technical features disclosed in each of the examples may be appropriately used in combination with the technical features disclosed in other examples.

The evaluations in the examples and the comparative examples were performed in the following manner.

< Viscoelasticity measurement >

The polyethylene-based resin particles or the polyethylene-based resin foamed particles were laid on an iron plate as closely as possible. Another iron plate was disposed so that the particles were sandwiched between the iron plates. Then, the particles were kept in an atmosphere of 200°C for 30 minutes. Consequently, the polyethylene-based resin particles or the polyethylene-based resin foamed particles were melted and formed into a sheet-like material. The sheet-like material was cooled to produce a resin sheet with a thickness of about 0.5 mm. Subsequently, a test piece of 18 mm (length) $\times$ 4 mm (width) $\times$ about 0.5 mm (thickness) was cut out of the resin sheet. This test piece was used as a sample for the viscoelasticity measurement. The thickness of the resin sheet was determined as follows. First, the thickness of the resin sheet was measured in three points, i.e., both ends and the center with respect to the longitudinal direction by using a Standard Outside Micrometer M300 manufactured by Mitutoyo Corporation. Then, the average of the thicknesses measured in the three points was calculated and used. Next, the viscoelasticity measurement (i.e., the measurement of tan $\delta$ and a complex viscosity) of the test piece was performed by using DVA 200 manufactured by IT Keisoku Seigyo Co., Ltd. as a dynamic viscoelasticity measuring apparatus (DMA). The measurement conditions were as follows.

  (a) Measurement mode: tension
  (b) Distance between chucks: 10 mm
  (c) Temperature rise conditions: 5°C/min
  (d) Frequency: 1.67 Hz
  (e) Distortion: 0.1%

< Melt index (MI) of polyethylene-based resin or the like >

The melt index (MI) of the polyethylene-based resin as the base resin or the polyethylene-based resin particles was measured according to JIS K 7210 under the condition that the temperature was 190°C and the load was 2.16 kg. The melt index of the cross-linked polyethylene-based resin particles was measured in the same manner.

< Measurement of melting point of polyethylene-based resin foamed particles or the like >

The melting point was a melting peak temperature during the second temperature rise of the DSC curve that was obtained when the temperature of 3 mg to 6 mg of the polyethylene-based resin foamed particles was increased from 10°C to 190°C at a rate of 10°C/min, then reduced to 10°C at a rate of 10°C/min, and again increased to 190°C at a rate of 10°C/min by using a differential scanning calorimeter [DSC6200, manufactured by Seiko Instruments Inc.]. The melting points of the polyethylene-based resin and the polyethylene-based resin particles were measured in the same manner.

< Density of polyethylene-based resin >

The polyethylene-based resin was weighed in the range of 10 g to 50 g and dried at 60°C for 6 hours. Thereafter, the state of the polyethylene-based resin was controlled in a room where the temperature was 23°C and the relative humidity was 50%. Next, a weight W (g) of the polyethylene-based resin was measured. Then, the polyethylene-based resin was immersed in ethanol contained in a graduated cylinder, and a volume V (cm$^3$) of the polyethylene-based resin was measured based on an increase in liquid level of the graduated cylinder (water immersion method). Thus, the density $\rho$r (= W/V (g/cm$^3$)) of the polyethylene-based resin was calculated from the volume V (cm$^3$).

< Foaming ratio >

The polyethylene-based resin foamed particles were weighed in the range of 3 g to 10 g and dried at 60°C for 6 hours. Thereafter, the state of the polyethylene-based resin foamed particles was controlled in a room where the temperature was 23°C and the relative humidity was 50%. Next, a weight w (g) of the polyethylene-based resin foamed particles was measured. Then, the polyethylene-based resin foamed particles were immersed in ethanol contained in a graduated cylinder, and a volume v (cm$^3$) of the polyethylene-based resin foamed particles was measured based on an increase in liquid level of the graduated cylinder (water immersion method). Subsequently, the density pb (= w/v) of the polyethylene-based resin foamed particles was calculated from the volume v (cm$^3$). Thus, the ratio (pr /pb) of the density ρr of the polyethylene-based resin before foaming to the density pb of the polyethylene-based resin foamed particles was determined as a foaming ratio K (=pr /pb).

< Average cell diameter >

The polyethylene-based resin foamed particles were cut through substantially the center of each particle, taking great care not to damage the cell membrane (of the individual polyethylene-based resin foamed particles). The cut surfaces were observed by a microscope [digital microscope VHX-100, manufactured by KEYENCE CORPORATION.]. Then, a line segment with a length of 1000 μm was drawn that passed through the portion of each of the polyethylene-based resin foamed particles except for the surface layer, and the number of cells n through which the line segment penetrated was determined. Based on the number of cells n, a cell diameter was calculated by 1000/n (μm). The same measurement was performed on 10 polyethylene-based resin foamed particles, and the average of the cell diameters thus calculated was defined as an average cell diameter.

< Open-cell content >

A volume of the polyethylene-based resin foamed particles was determined in accordance with the method shown in Procedure C of ASTM D2856-87 and represented by Vc (cm$^3$). The open-cell content (%) was calculated by the following formula.

$$\text{Open-cell content } (\%) = ((Va - Vc) \times 100) / Va$$

The volume Vc was measured with an air-comparison pycnometer Model 1000 manufactured by Tokyo Science Co., Ltd. On the other hand, Va (cm$^3$) represents an apparent volume of the polyethylene-based resin foamed particles and was measured as follows. After the volume Vc was measured with the air-comparison pycnometer, all the polyethylene-based resin foamed particles were immersed in ethanol contained in a graduated cylinder, and the volume Va was measured based on an increase in liquid level of the graduated cylinder (water immersion method).

< Molding cycle >

The polyethylene-based resin foamed particles were placed in a pressure vessel, and air was injected to raise the pressure in the pressure vessel, so that an internal pressure of 0.16 MPa (absolute pressure) was applied to the polyethylene-based resin foamed particles (i.e., the polyethylene-based resin foamed particles were impregnated with air). The polyethylene-based resin foamed particles to which the internal pressure had been applied were filled into a mold that was designed for an in-mold foam molded product with external dimensions of 400 mm × 300 mm × 50 mm. First, air in the mold was discharged by water vapor of 0.1 MPa (gage pressure). Then, the polyethylene-based resin foamed particles were molded by heating (double side heating) for 10 seconds with heating steam at predetermined molding pressure. Thus, a returnable box was formed. In this case, the molding pressure during double side heating was changed in the range of 0.08 MPa (gage pressure) to 0.25 MPa (gage pressure) at 0.01 MPa intervals. Consequently, block-shaped molded products, each having dimensions of approximately 400 mm × 300 mm × 50 mm, were produced.
A series of processes of filling of the polyethylene-based resin foamed particles, molding, cooling, and removal was as follows.

(1) A mold was opened.
(2) The mold was closed until a gap of the mold in its opening/closing direction was 5 mm (i.e., cracking 10%).
(3) Thereafter, the polyethylene-based resin foamed particles were filled into the mold without flowing outside the mold system.
(4) Then, the mold was closed so that the gap was 0 mm, and the polyethylene-based resin foamed particles were compressed.

(5) A preheating process, a one side heating process, an opposite side heating process, and a double side heating process were performed.

(6) The mold was water-cooled.

(7) A block-shaped molded product was taken out of the mold when the foaming pressure of the molded product in the mold reached 0.04 MPa (gage pressure).

A series of molding processes (1) to (7) was automatically operated, and the time required for each process other than the process (6) was constant. The preheating process took 3 seconds, the one side heating process took 7 seconds, the opposite side heating process took 7 seconds, and the double side heating process took 10 seconds.

The foaming pressure of the molded product in the mold was measured with a contact pressure sensor. Specifically, the contact pressure sensor was attached to a portion of the inner surface of the mold that would come into contact with the molded product, and detected pressure exerted by the molded product.

The time required for the processes (1) to (7) was measured for each molding. The time required for molding with a minimum molding pressure (as will be described later) was defined as a "molding cycle (second)."

< Evaluation of fusion properties of polyethylene-based resin in-mold foam molded product and determination of minimum molding pressure >

The block-shaped molded products thus produced were allowed to stand still at a temperature of 23°C and a relative humidity of 50% for 2 hours, and then cured at a temperature of 65°C and a relative humidity of 20% for 24 hours. Subsequently, the block-shaped molded products were left in a room at a temperature of 23°C and a relative humidity of 50% for 4 hours. These block-shaped molded products were used as objects to be evaluated. Next, a crack with a depth of about 5 mm was made with a knife on the surface of each of the block-shaped molded products to be evaluated. Then, each of the block-shaped molded products was split along the crack, and the fracture cross section was observed. The ratio of the number of broken particles to the total number of particles in the fracture cross section was calculated and defined as a fusion rate (%) of the in-mold foam molded product. Then, the lowest molding pressure of the molding pressure during double side heating, by which the fusion rate of the in-mold foam molded product reached 80% or more, was defined as a minimum molding pressure.

< Amount of water absorption >

The external dimensions (length, width, and thickness) of the block-shaped molded product that had been subjected to the above pretreatment and selected as the object to be evaluated were measured with a vernier caliper manufactured by Mitutoyo Corporation. The volume (unit: $cm^3$) of the block-shaped molded product was calculated from the product of the dimensions. Next, the weight of the block-shaped molded product was measured, and then immersed in water for 24 hours. After 24 hours, the block-shaped molded product was taken out of water and wiped with a cloth to remove only water attached to the surface of the block-shaped molded product. Subsequently, the weight of the block-shaped molded product was measured. Thus, an increment in weight (unit: g) was determined by comparing the weights of the block-shaped molded product before and after immersion in water. The amount of water absorption was calculated by the following formula and evaluated on a 3-point scale as follows.

$$\text{Amount of water absorption (g/100 cm}^3) = (\text{increment in weight / volume of block-shaped molded product}) \times 100$$

< Evaluation of amount of water absorption >

A (good, with properties to meet market demand): The amount of water absorption was less than 0.20 g/100 $cm^3$.

B (average, with properties to meet market demand): The amount of water absorption was 0.20 g/100 $cm^3$ or more and less than 0.85 g/100 $cm^3$.

C (poor, with properties to meet market demand): The amount of water absorption was 0.85 g/$cm^3$ or more.

Table 1 shows the physical properties of the polyethylene-based resins (A-1, A-2, A-3, and B-1) used in the examples and the comparative examples.

[TABLE 1]

| Polyethylene-based resin | Melting point | Density | Melt index |
|---|---|---|---|
| Low-density polyethylene-based resin A-1 (SUNTEC M2713 manufactured by Asahi Kasei Corporation) | 115. 9°C | 0. 929g/cm$^3$ | 1. 3g/ 10 min |
| Low-density polyethylene-based resin A-2 (SUNTEC M1920 manufactured by Asahi Kasei Corporation) | 109. 2°C | 0. 921g/cm$^3$ | 2. 0g/ 10 min |
| Low-density polyethylene-based resin A-3 (NUC-8160 manufactured by NUC Corporation) | 109. 4°C | 0. 922g/cm$^3$ | 2. 4g/ 10 min |
| Linear low-density polyethylene-based resin B-1 (prototype manufactured by Prime Polymer Co., Ltd.) | 124. 3°C | 0. 930g/cm$^3$ | 1. 9g/ 10 min |

The following compounds were used as cross-linking agents.

(a) dicumyl peroxide (DCP) manufactured by NOF CORPORATION
(b) t-butylperoxybenzoate (tBPOB) manufactured by NOF CORPORATION

(Example 1)

< Production of polyethylene-based resin particles >

First, 100 parts by weight of the low-density polyethylene-based resinA-1 was blended with talc and glycerol in amounts as shown in Table 2. The mixture thus obtained was placed in a 26 mm $\phi$ twin screw extruder [TEM26-SX, manufactured by TOSHIBA MACHINE CO., LTD.] and melted and kneaded. Then, the mixture was extruded through a cylindrical die to form strands at a resin temperature of 220°C. The cylindrical die was connected to the end of the extruder and had a diameter of 1.2 mm. The extruded strands were water-cooled and subsequently cut with a cutter, resulting in cylindrical polyethylene-based resin particles (1.2 mg/grain). The resin temperature was measured with a resin thermometer that was provided in the die located immediately after the tip of the screw in the extruder. The melting point, tan $\delta$, complex viscosity, and melt index of the polyethylene-based resin particles thus produced were evaluated. Table 2 shows the results.

< Production of cross-linked polyethylene-based resin particles >

A pressure resistant sealed vessel was charged with 100 parts by weight of the polyethylene-based resin particles thus produced, 200 parts by weight of pure water, 1 part by weight of tricalcium phosphate, 0.006 parts by weight of sodium n-paraffin sulfonate, and 0.4 parts by weight of DCP. Then, the inside of the pressure resistant sealed vessel was replaced with nitrogen. The temperature was increased while stirring the contents of the sealed vessel, so that the liquid temperature in the sealed vessel reached 160°C. This temperature was held for 45 minutes. Subsequently, the sealed vessel was cooled, and the cross-linked polyethylene-based resin particles were taken out of the sealed vessel. The melting point of the cross-linked polyethylene-based resin particles thus produced was evaluated. Table 2 shows the results. The melt index of the cross-linked polyethylene-based resin particles could not be measured according to JIS K 7210 under the condition that the temperature was 190°C and the load was 2.16 kg because of the extremely high viscosity. This confirmed that the particles had been cross-linked.

< Production of cross-linked polyethylene-based resin foamed particles >

A pressure resistant sealed vessel was charged with 100 parts by weight of the cross-linked polyethylene-based resin particles thus produced, 225 parts by weight of pure water, 0.56 parts by weight of tricalcium phosphate, and 0.034 parts by weight of sodium n-paraffin sulfonate. Then, the pressure resistant sealed vessel was degassed (vacuumized). Subsequently, 8.0 parts by weight of carbon dioxide was added to the pressure resistant sealed vessel while stirring, and the sealed vessel was heated until the liquid temperature in the sealed vessel was 130°C. When the liquid temperature reached 130°C, carbon dioxide was further added to adjust the pressure (foaming pressure) in the sealed vessel to 3.5 MPa (gage pressure). After the temperature and the pressure in the sealed vessel was held for 25 minutes, the valve under the sealed vessel was opened to release the aqueous dispersion (containing the foamed particles and the aqueous dispersing medium) through an orifice into a foaming pipe (collection vessel) under atmospheric pressure. Thus, foamed particles (first-step foamed particles) were produced. In this case, to prevent the pressure in the sealed vessel from dropping during the release of the aqueous dispersion, additional carbon dioxide was injected to maintain the pressure in the sealed vessel. Moreover, steam was blown into the foaming pipe so that the temperature was increased to 98°C, and the steam came into contact with the foamed particles that had been released to the foaming pipe. The first-step foamed particles thus produced were dried at 60°C for 6 hours. Thereafter, the melting point, tan $\delta$, complex viscosity, foaming ratio, and average cell diameter of the first-step foamed particles were evaluated. Table 2 shows the results.

Next, the first-step foamed particles were placed in a pressure vessel, and air was injected to raise the pressure in the pressure vessel, so that the first-step foamed particles were impregnated with pressurized air and had an internal pressure of 0.16 MPa (absolute pressure). Then, the first-step foamed particles were brought into contact with steam at a steam pressure of 0.017 MPa (gage pressure) and foamed by second-step foaming. The second-step foamed particles thus produced were dried at 60°C for 6 hours. Thereafter, the melting point, tan $\delta$, complex viscosity, foaming ratio, average cell diameter, and open-cell content of the second-step foamed particles were evaluated. Table 2 shows the results.

< Production of polyethylene-based resin in-mold foam molded product >

The second-step foamed particles thus produced were placed in a pressure vessel, and air was injected to raise the pressure in the pressure vessel, so that the second-step foamed particles were impregnated with pressurized air and had an internal pressure of 0.16 MPa (absolute pressure). The second-step foamed particles to which the internal pressure had been applied were filled into a mold that was designed for an in-mold foam molded product with external dimensions of 400 mm × 300 mm × 50 mm. First, air in the mold was discharged by water vapor of 0.1 MPa (gage pressure). Then, the second-step foamed particles were molded by heating (double side heating) for 10 seconds with heating steam at predetermined molding pressure. Thus, a returnable box was formed. In this case, the molding pressure during double side heating was changed in the range of 0.08 MPa (gage pressure) to 0.25 MPa (gage pressure) at 0.01 MPa intervals. Consequently, block-shaped molded products, each having dimensions of approximately 400 mm × 300 mm × 50 mm, were produced. The fusion rates of the block-shaped molded products obtained for each molding pressure during double side heating were evaluated. Then, the lowest molding pressure of the molding pressure during double side heating, by which the fusion rate of the in-mold foam molded product reached 80% or more, was defined as a minimum molding pressure. The molding cycle, density, and amount of water absorption of the in-mold foam molded product with the minimum molding pressure were evaluated. Table 2 shows the results.

(Examples 2 to 9, Comparative Examples 1 to 9)

First-step foamed particles, second-step foamed particles, and polyethylene-based resin in-mold foam molded products were produced and evaluated in the same manner of Example 1 except that the type of polyethylene-based resin, the type and amount of additives, and other various conditions were changed as shown in Table 2 or 3. Table 2 or 3 shows the results of the evaluation.

In Comparative Example 3, the open-cell content of the first-step foamed particles thus produced was high, and broken cells were clearly observed. Therefore, internal pressure was not applied to the first-step foamed particles. Accordingly, the first-step foamed particles were not subjected to second-step foaming as well as in-mold foam molding. The first-step foamed particles had a tan $\delta$ of 0.99 and a complex viscosity of 4200 Pa·s. Similarly, in Comparative Example 9, the open-cell content of the first-step foamed particles thus produced was high, and broken cells were clearly observed. Therefore, internal pressure was not applied to the first-step foamed particles. Accordingly, the first-step foamed particles were not subjected to second-step foaming as well as in-mold foam molding. The first-step foamed particles had a tan $\delta$ of 0.99 and a complex viscosity of 4000 Pa·s.

(Comparative Example 10)

Polyethylene-based resin particles and cross-linked polyethylene-based resin particles were produced in the same manner as Example 1 except that the type of polyethylene-based resin, the type and amount of additives, and other various conditions were changed as shown in Table 3.

< Production of cross-linked polyethylene-based resin foamed particles >

The cross-linked polyethylene-based resin particles thus produced were placed in a pressure vessel without using an aqueous dispersing medium. Then, carbon dioxide was injected to raise the pressure in the pressure vessel to 3.2 MPa (gage pressure), and the cross-linked polyethylene-based resin particles were impregnated with carbon dioxide for 3 hours. Next, the cross-linked polyethylene-based resin particles that had been impregnated with carbon dioxide were moved to another pressure vessel, where the cross-linked polyethylene-based resin particles were brought into contact with steam at a steam pressure of 0.066 MPa (gage pressure) and foamed without using an aqueous dispersing medium. Thus, first-step foamed particles were produced. The foaming ratio of the first-step foamed particles was 2.4 times.

The first-step foamed particles thus produced were placed in a pressure vessel, and air was injected to raise the pressure in the pressure vessel, so that the first-step foamed particles were impregnated with pressurized air and had an internal pressure of 0.60 MPa (absolute pressure). Then, the first-step foamed particles were brought into contact with steam at a steam pressure of 0.066 MPa (gage pressure) and foamed by second-step foaming. The foaming ratio of the second-step foamed particles was 16 times.

The second-step foamed particles thus produced were placed in a pressure vessel, and air was injected to raise the pressure in the pressure vessel, so that the second-step foamed particles were impregnated with pressurized air and had an internal pressure of 0.23 MPa (absolute pressure). Then, the second-step foamed particles were brought into contact with steam at a steam pressure of 0.015 MPa (gage pressure) and foamed by third-step foaming. The foaming ratio of the third-step foamed particles was 30 times.

< Production of polyethylene-based in-mold foam molded product >

An in-mold foam molded product was produced and evaluated in the same manner as Example 1 except that the third-step foamed particles thus produced were used. Table 3 shows the results.

[TABLE 2]

| | | | Examples | | | | | | | | |
|---|---|---|---|---|---|---|---|---|---|---|---|
| | | | 1 | 2 | 3 | 4 | 5 | 6 | 7 | 8 | 9 |
| Polyethylene-based resin | | - | A-1 | A-1 | A-1 | A-2 | A-2 | A-3 | B-1 | A-1 | A-1 |
| Inorganic substance | Talc | Parts by weight | 0.1 | 0.1 | 0.1 | 0.1 | 0.1 | 0.1 | 0.1 | 0.1 | 0.1 |
| Hydrophilic compound | glycerol | Parts by weight | 0.2 | 0.2 | 0.2 | 0.2 | 0.2 | 0.2 | 0.2 | 0.2 | 0.2 |
| Polyethylene-based resin particles | Melting point | °C | 115.9 | 115.9 | 115.9 | 109.2 | 109.2 | 109.4 | 124.3 | 115.9 | 115.9 |
| | Melt index | g/10 min | 1.3 | 1.3 | 1.3 | 2.0 | 2.0 | 2.4 | 1.9 | 1.3 | 1.3 |
| | tan$\delta$ | - | 0.74 | 0.74 | 0.74 | 0.74 | 0.74 | 0.78 | 1.74 | 0.74 | 0.74 |
| | Complex viscosity | Pa·s | 5200 | 5200 | 5200 | 3800 | 3800 | 3400 | 5600 | 5200 | 5200 |
| Cross-linking conditions | Cross-linking agent DCP | Parts by weight | 0.4 | 0.4 | 0.6 | 0.2 | 0.4 | 0.2 | 0.07 | - | 0.4 |
| | Cross-linking agent tBPOB | Parts by weight | - | - | - | - | - | - | - | 0.85 | - |
| | Cross-linking temperature | °C | 160 | 160 | 160 | 160 | 160 | 160 | 160 | 160 | 160 |
| | Cross-linking time | min | 45 | 45 | 45 | 45 | 45 | 45 | 45 | 45 | 45 |
| Cross-linked polyethylene-based resin particles | Melting point | °C | 115.2 | 115.0 | 115.0 | 107.2 | 106.4 | 111.4 | 123.5 | 115.0 | 115.0 |
| | Absolute value of difference in melting point before and after cross-linking | °C | 0.7 | 0.9 | 0.9 | 2.0 | 2.8 | 2.0 | 0.8 | 0.8 | 0.9 |
| | tan$\delta$ | - | 0.58 | 0.58 | 0.45 | 0.50 | 0.35 | 0.58 | 0.65 | 0.47 | 0.58 |
| | Complex viscosity | Pa·s | 7100 | 7100 | 11200 | 6900 | 12300 | 6100 | 19000 | 9100 | 7100 |

EP 3 438 173 B1

19

(continued)

| | | | Examples | | | | | | | |
|---|---|---|---|---|---|---|---|---|---|---|
| | | 1 | 2 | 3 | 4 | 5 | 6 | 7 | 8 | 9 |
| First-step foaming conditions | Amount of carbon dioxide | Parts by weight | 8.0 | 8.0 | 8.0 | 8.0 | 8.0 | 8.0 | 8.0 | 8.0 | 8.0 |
| | Foaming temperature | °C | 130 | 130 | 130 | 130 | 130 | 130 | 130 | 130 | 130 |
| | Foaming pressure (gage pressure) | MPa | 3.5 | 3.5 | 3.5 | 3.5 | 3.5 | 3.5 | 3.5 | 3.5 | 3.5 |

[TABLE 2 (Continued)]

|  |  |  | Examples | | | | | | | | |
|---|---|---|---|---|---|---|---|---|---|---|---|
|  |  |  | 1 | 2 | 3 | 4 | 5 | 6 | 7 | 8 | 9 |
| First-step foamed particles | Melting point | °C | 115.2 | 115.0 | 115.0 | 107.2 | 106.4 | 111.4 | 123.5 | 115.0 | 115.0 |
|  | tan$\delta$ | - | 0.58 | 0.58 | 0.45 | 0.50 | 0.35 | 0.58 | 0.65 | 0.47 | 0.58 |
|  | Complex viscosity | Pa·s | 7100 | 7100 | 11200 | 6900 | 12300 | 6100 | 19000 | 9100 | 7100 |
|  | Foaming ratio | times | 17 | 17 | 14 | 14 | 10 | 18 | 11 | 15 | 17 |
|  | Average cell diameter | $\mu$m | 200 | 200 | 160 | 120 | 140 | 180 | 120 | 170 | 200 |
|  | Open-cell content | % | - | - | - | - | - | - | - | - | 3 |
| Second-step foaming conditions | Internal pressure (absolute pressure) of foamed particles | MPa | 0.16 | 0.22 | 0.22 | 0.20 | 0.34 | 0.16 | 0.35 | 0..22 | - |
|  | Steam pressure (gage pressure) | MPa | 0.017 | 0.014 | 0.039 | 0.017 | 0.035 | 0.015 | 0.050 | 0.037 | - |
| Second-step foamed particles | Melting point | °C | 115.2 | 115.0 | 115.0 | 107.2 | 106.4 | 111.4 | 123.5 | 115.5 | - |
|  | tan$\delta$ | - | 0.58 | 0.58 | 0.45 | 0.50 | 0.35 | 0.58 | 0.65 | 0.47 | - |
|  | Complex viscosity | Pa·s | 7100 | 7100 | 11200 | 6900 | 12300 | 6100 | 19000 | 9100 | - |
|  | Foaming ratio | times | 22 | 30 | 30 | 30 | 30 | 30 | 30 | 30 | - |
|  | Average cell diameter | $\mu$m | 230 | 290 | 240 | 200 | 260 | 320 | 200 | 280 | - |
|  | Open-cell content | % | 4 | 4 | 3 | 3 | 8 | 8 | 3 | 3 | - |
| In-mold foam molded product | Minimum molding pressure (fusion properties) | MPa | 0.19 | 0.19 | 0.19 | 0.19 | 0.19 | 0.19 | 0.19 | 0.19 | 0.19 |
|  | Molding cycle | sec | 190 | 185 | 195 | 200 | 110 | 170 | 150 | 187 | 100 |
|  | Density of molded product | g/L | 30 | 25 | 24 | 25 | 26 | 23 | 24 | 24 | 40 |
|  | Amount of water absorption | g/100cm3 | 0.10 | 0.11 | 0.08 | 0.10 | 0.50 | 0.69 | 0.80 | 0.11 | 0.37 |
|  | Evaluation of amount of water absorption | - | A | A | A | A | B | B | B | A | B |

[TABLE 3]

| | | | Comparative Examples | | | | | | | | | |
|---|---|---|---|---|---|---|---|---|---|---|---|---|
| | | | 1 | 2 | 3 | 4 | 5 | 6 | 7 | 8 | 9 | 10 |
| Polyethylene-based resin | | - | B-1 | B-1 | A-1 | B-1 | A-1 | A-1 | A-1 | A-1 | A-1 | A-1 |
| Inorganic substance | talc | Parts by weight | 0.1 | 0.1 | 0.1 | 0.1 | 0.1 | 0.1 | 0.1 | 0.1 | 0.1 | 0.1 |
| Hydrophilic compound | glycerol | Parts by weight | 0.2 | 0.2 | 0.2 | 0.2 | 0.2 | 0.2 | 0.2 | 0.2 | 0.2 | 02 |
| Polyethylene-based resin particles | Melting point | °C | 124.3 | 124.3 | 115.9 | 124.3 | 115.9 | 115.9 | 115.9 | 115.9 | 115.9 | 115.9 |
| | Melt index | g/10 min | 1.9 | 1.9 | 1.3 | 1.9 | 1.3 | 1.3 | 1.3 | 1.3 | 1.3 | 1.3 |
| | tan$\delta$ | - | 1.74 | 1.74 | 0.74 | 1.74 | 0.74 | 0.74 | 0.74 | 0.74 | 0.74 | 0.74 |
| | Complex viscosity | Pa·s | 5600 | 5600 | 5200 | 5600 | 5200 | 5200 | 5200 | 5200 | 5200 | 5200 |
| Cross-linking conditions | Cross-linking agent DCP | Parts by weight | (not cross-linked) | 0.2 | 0.2 | 0.1 | 0.4 | 0.4 | 0.4 | 0.4 | (not cross-linked) | 0.4 |
| | Cross-linking agent tBPOB | Parts by weight | - | - | - | - | - | - | - | - | - | - |
| | Cross-linking temperature | °C | - | 160 | 160 | 160 | 160 | 160 | 160 | 160 | - | 160 |
| | Cross-linking time | min | - | 45 | 45 | 45 | 45 | 45 | 45 | 45 | - | 45 |
| Cross-linked polyethylene-based resin particles | Melting point | °C | - | 121.4 | 115.3 | 123.4 | 115.0 | 115.0 | 115.0 | 115.0 | - | 115.0 |
| | Absolute value of difference in melting point before and after cross-linking | °C | - | 2.9 | 0.6 | 0.9 | 0.9 | 0.9 | 0.9 | 0.9 | - | 0.9 |
| | tan$\delta$ | - | - | 0.22 | 0.99 | 0.44 | 0.58 | 0.58 | 0.58 | 0.58 | - | 0.58 |
| | Complex viscosity | Pa·s | - | 46000 | 4200 | 21000 | 7100 | 7100 | 7100 | 7100 | - | 7100 |

EP 3 438 173 B1

22

(continued)

| | | Comparative Examples | | | | | | | | | |
|---|---|---|---|---|---|---|---|---|---|---|---|
| | | 1 | 2 | 3 | 4 | 5 | 6 | 7 | 8 | 9 | 10 |
| First-step foaming conditions | Amount of carbon dioxide | Parts by weight | 8.0 | 8.0 | 8.0 | 8.0 | 8.0 | 10.0 | 8.0 | 10.5 | 8.0 | 80 |
| | Foaming temperature | °C | 122 | 130 | 130 | 130 | 115 | 150 | 120 | 130 | 113 | 130 |
| | Foaming pressure (gage pressure) | MPa | 3.5 | 3.5 | 3.5 | 3.5 | 3.5 | 3.6 | 3.5 | 3.8 | 3.5 | (0.066) |

[TABLE 3 (Continued)]

| | | | Comparative Examples | | | | | | | | | |
|---|---|---|---|---|---|---|---|---|---|---|---|---|
| | | | 1 | 2 | 3 | 4 | 5 | 6 | 7 | 8 | 9 | 10 |
| First-step foamed particles | Melting point | °C | 124.3 | 121.4 | 115.3 | 123.4 | 115.0 | 115.0 | 115.0 | 115.0 | 115.9 | 115.0 |
| | tan$\delta$ | - | 1.7 | 0.22 | 0.99 | 0.44 | 0.58 | 0.58 | 0.58 | 0.58 | 0.99 | 0.58 |
| | Complex viscosity i | Pa·s | 5600 | 46000 | 4200.0 | 21000 | 7100 | 7100 | 7100 | 7100 | 4000 | 7100 |
| | Foaming ratio | times | 12 | 9 | 17 | 9 | 2 | 30 | 9 | 20 | 10 | 2.4 |
| | Average cell diameter | $\mu$ m | 170 | 70 | 200 | 100 | 15 | 200 | 90 | 180 | 100 | 30 |
| | Open-cell content | % | - | - | 18 | - | - | 10 | - | - | 20 | - |
| Second-step foaming conditions | Internal pressure (absolute pressure) of foamed particles | MPa | 0.25 | 0.32 | Second-step foaming was not performed due to a high open-cell content of the first-step foamed particles. | 0.38 | 0.40 | - | 0.30 | 0.16 | Second-step foaming was not performed due to a high open-cell content of the first-step foamed particles. | 0.23 (*) |
| | Steam pressure (gage pressure) | MPa | 0.045 | 0.090 | | 0.050 | 0.120 | - | 0.080 | 0.014 | | 0.015 (*) |
| Second-step foamed particles | Melting point | °C | 124.3 | 121.4 | | 123.4 | 115.0 | - | 115.0 | 115.0 | | 115.0 (*) |
| | tan$\delta$ | - | 1.7 | 0.22 | | 0.44 | 0.58 | - | 0.58 | 0.58 | | 0.58 (*) |
| | Complex viscosity | Pa·s | 5600 | 46000 | | 21000 | 7100 | - | 7100 | 7100 | | 7100 (*) |
| | Foaming ratio | times | 28 | 30 | | 30 | 30 | - | 30 | 30 | | 30(*) |
| | Average cell diameter | $\mu$ m | 170 | 130 | | 200 | 80 | - | 200 | 180 | | 140 (*) |
| | Open-cell content | % | 2 | 10 | | 3 | 14 | - | 10 | 3 | | 3(*) |

EP 3 438 173 B1

(continued)

| | | | | | | | Comparative Examples | | | | |
|---|---|---|---|---|---|---|---|---|---|---|---|
| | | 1 | 2 | 3 | 4 | 5 | 6 | 7 | 8 | 9 | 10 |
| In-mold foam molded product | Minimum molding pressure (fusion properties) | MPa | 0.11 | 0.19 | In-mold foam molding was not performed due to a high open-cell content of the first-step foamed particles. | 0.19 | 0.19 | 0.19 | 0.19 | 0.19 | In-mold foam molding was not performed due to a high open-cell content of the first-step foamed particles. | 0.19 |
| | Molding cycle | sec | 140 | 210 | | 120 | 110 | 260 | 140 | 215 | | 250 |
| | Density of molded product | g/L | 26 | 25 | | 25 | 25 | 25 | 25 | 25 | | 25 |
| | Amount of water absorption | g/100cm³ | 0.91 | 0.90 | | 1 | 1.5 | 0.1 | 1.1 | 0.1 | | 0.09 |
| | Evaluation of amount of water absorption | - | C | C | | C | C | A | C | A | | A |

Note: (*) third-step foaming conditions or third-step foamed particles

25

As can be seen from the results in Tables 2 and 3, the use of the polyethylene-based resin foamed particles in the examples reduced the molding cycle in the production of the polyethylene-based resin in-mold foam molded products, and also reduced the amount of water absorption of the polyethylene-based resin in-mold foam molded products.

On the other hand, in the comparative examples, the polyethylene-based resin in-mold foam molded products did not have a balance between the molding cycle and the amount of water absorption. Thus, when the molding cycle was short, the amount of water absorption was increased; and when the amount of water absorption was reduced, the molding cycle was long. Specifically, in Comparative Example 1, the polyethylene-based resin particles with a tan $\delta$ of more than 0.7 were used for first-step foaming, which resulted in a large amount of water absorption of the polyethylene-based resin in-mold foam molded product. In Comparative Example 2, the polyethylene-based resin particles with a tan $\delta$ of less than 0.3 and a complex viscosity of more than 20000 Pa·s were used for first-step foaming, which resulted in not only a long molding cycle in the production of the polyethylene-based resin in-mold foam molded product, but also a large amount of water absorption of the polyethylene-based resin in-mold foam molded product. In Comparative Example 3, the polyethylene-based resin particles with a tan $\delta$ of less than 0.3 and a complex viscosity of less than 5000 Pa·s were used for first-step foaming, which made it impossible to produce second-step foamed particles and a polyethylene-based resin in-mold foam molded product. In Comparative Example 4, the polyethylene-based resin particles with a complex viscosity of more than 20000 Pa·s were used for first-step foaming, which resulted in a large amount of water absorption of the polyethylene-based resin in-mold foam molded product. In Comparative Examples 5 and 7, the foaming ratio was less than 10 times in the first-step foaming process, which resulted in a large amount of water absorption of the polyethylene-based resin in-mold foam molded products. In Comparative Examples 6 and 8, the foaming ratio was more than 18 times in the first-step foaming process, which resulted in a long molding cycle in the production of the polyethylene-based resin in-mold foam molded products. In Comparative Example 9, the polyethylene-based resin particles with a tan $\delta$ of more than 0.7 and a complex viscosity of less than 5000 Pa·s were used for first-step foaming, which made it impossible to produce second-step foamed particles and a polyethylene-based resin in-mold foam molded product. In Comparative Example 10, the cross-linked polyethylene-based resin particles that had been impregnated with carbon dioxide were brought into contact with steam and foamed without using an aqueous dispersing medium, which resulted in a long molding cycle in the production of the polyethylene-based resin in-mold foam molded product.

Industrial Applicability

A polyethylene-based resin in-mold foam molded product with low water absorption properties and a short molding cycle can easily be produced from the polyethylene-based resin foamed particles obtained by the production method of the present invention. Therefore, the polyethylene-based resin foamed particles of the present invention can have a wide range of applications in various industries, such as returnable boxes, cushioning materials, cushioning packaging materials, and heat insulating materials. The polyethylene-based resin foamed particles of the present invention are particularly useful for returnable boxes that require washing.

**Claims**

1. A method for producing polyethylene-based resin foamed particles by foaming polyethylene-based resin particles containing a polyethylene-based resin as a base resin, wherein

    the polyethylene-based resin particles are cross-linked by a cross-linking process,
    the crosslinked polyethylene-based resin particles have a melting point of 105°C or more and 125°C or less, and
    the polyethylene-based resin particles have a tan $\delta$ of 0.3 or more and 0.7 or less and a complex viscosity of 5000 Pa·s or more and 20000 Pa·s or less, which are determined by a viscoelasticity measurement at a temperature of 130°C and a frequency of 1.67 Hz,
    the method comprising a first-step foaming process,
    the first-step foaming process including dispersing the polyethylene-based resin particles in an aqueous dispersing medium in a sealed vessel, adding a foaming agent containing carbon dioxide to an aqueous dispersion thus prepared, heating and pressurizing the aqueous dispersion, and then releasing the aqueous dispersion to a pressure region where pressure is lower than internal pressure of the sealed vessel,
    wherein a foaming ratio in the first-step foaming process is 10 times or more and 18 times or less,
    wherein the melting point of the crosslinked polyethylene-based resin particles is determined by differential scanning calorimetry (DSC) according the description.

2. The method according to claim 1, wherein the tan $\delta$ is 0.4 or more and 0.6 or less and the complex viscosity is 6500 Pa·s or more and 12000 Pa·s or less, which are determined by the viscoelasticity measurement at a temperature of 130°C and a frequency of 1.67 Hz.

3. The method according to claim 1, wherein the cross-linking process uses a cross-linking agent to cross-link the polyethylene-based resin particles in the aqueous dispersing medium.

4. The method according to claim 1 or 3, comprising the cross-linking process of the polyethylene-based resin particles before the first-step foaming process.

5. The method according to any one of claims 1 to 4, wherein an absolute value of a difference in melting point between the polyethylene-based resin as the base resin of the polyethylene-based resin particles and the cross-linked polyethylene-based resin particles is 2°C or less,
wherein the melting point of the polyethylene-based resin as the base resin of the polyethylene-based resin particles and the melting point of the cross-linked polyethylene-based resin particles is determined by differential scanning calorimetry (DSC) according the description, respectively.

6. The method according to any one of claims 1 to 5, wherein the absolute value of the difference in melting point between the polyethylene-based resin as the base resin of the polyethylene-based resin particles and the cross-linked polyethylene-based resin particles is 1°C or less,
wherein the melting point of the polyethylene-based resin as the base resin of the polyethylene-based resin particles and the melting point of the cross-linked polyethylene-based resin particles is determined by differential scanning calorimetry (DSC) according the description, respectively.

7. The method according to any one of claims 1 to 6, wherein the polyethylene-based resin as the base resin of the polyethylene-based resin particles has a melt index of 0.2 g/10 min or more and less than 2.0 g/10 min,
wherein the melt index is a value measured according to JIS K 7210 under the condition that the temperature is 190°C and the load is 2.16 kg.

8. The method according to any one of claims 1 to 7, wherein the polyethylene-based resin as the base resin of the polyethylene-based resin particles has a density of 0.920 g/cm$^3$ or more and 0.932 g/cm$^3$ or less.

9. The method according to any one of claims 1 to 8, wherein the polyethylene-based resin foamed particles have a melting point of 113°C or more and 117°C or less,
wherein the melting point of the polyethylene-based resin foamed particles is determined by differential scanning calorimetry (DSC) according the description.

10. The method according to any one of claims 1 to 9, comprising a second-step foaming process after the first-step foaming process,
the second-step foaming process including placing the polyethylene-based resin foamed particles obtained by the first-step foaming process in a pressure vessel, impregnating the polyethylene-based resin foamed particles with inorganic gas containing at least one gas selected from the group consisting of air, nitrogen, and carbon dioxide to apply internal pressure, and then heating and further foaming the polyethylene-based resin foamed particles.

11. A method for producing a polyethylene-based resin in-mold foam molded product,
the method comprising:

filling the polyethylene-based resin foamed particles obtained by the method according to any one of claims 1 to 10 into a mold; and
molding the polyethylene-based resin foamed particles by in-mold foam molding.

12. The method according to claim 11, comprising:

placing the polyethylene-based resin foamed particles in a pressure vessel;
impregnating the polyethylene-based resin foamed particles with inorganic gas containing at least one gas selected from the group consisting of air, nitrogen, and carbon dioxide to apply internal pressure; and then
molding the polyethylene-based resin foamed particles by in-mold foam molding.

13. The method according to claim 11 or 12, wherein the polyethylene-based resin in-mold foam molded product has a density of 20 g/L or more and 35 g/L or less and an amount of water absorption of 0.15 g/100 cm$^3$ or less, wherein the amount of water absorption is measured according to the description.

14. The method according to any one of claims 11 to 13, wherein the polyethylene-based resin in-mold foam molded product is a returnable box.

## Patentansprüche

1. Ein Verfahren zur Herstellung von geschäumten Harzteilchen auf Polyethylen-Basis durch Schäumen von Harzteilchen auf Polyethylen-Basis, die ein Harz auf Polyethylen-Basis als ein Grundharz enthalten, wobei

die Harzteilchen auf Polyethylen-Basis durch ein Vernetzungsverfahren vernetzt sind, die vernetzten Harzteilchen auf Polyethylen-Basis einen Schmelzpunkt von 105°C oder mehr und 125°C oder weniger aufweisen und die Harzteilchen auf Polyethylen-Basis einen tan $\delta$ von 0,3 oder mehr und 0,7 oder weniger und eine komplexe Viskosität von 5000 Pa·s oder mehr und 20000 Pa·s oder weniger aufweisen, welche durch eine Viskoelastizitätsmessung bei einer Temperatur von 130°C und einer Frequenz von 1,67 Hz ermittelt werden, wobei das Verfahren ein Schäumungsverfahren mit einer ersten Stufe umfasst, wobei die erste Stufe des Schäumungsverfahrens Dispergieren der Harzteilchen auf Polyethylen-Basis in einem wässrigen Dispersionsmedium in einem verschlossenen Behälter, Zugabe eines Schäumungsmittels, das Kohlendioxid enthält, zu einer so hergestellten wässrigen Dispersion, Erhitzen und Druckbeaufschlagen der wässrigen Dispersion und dann Entspannen der wässrigen Dispersion in einen Druckbereich, in dem der Druck niedriger ist als der Innendruck des verschlossenen Behälters, beinhaltet, wobei ein Schäumungsverhältnis in der ersten Stufe des Schäumungsverfahrens das 10-Fache oder mehr und das 18-Fache oder weniger beträgt, wobei der Schmelzpunkt der vernetzten Harzteilchen auf Polyethylen-Basis durch Differentialscanningkalorimetrie (DSC) gemäß der Beschreibung ermittelt wird.

2. Das Verfahren nach Anspruch 1, wobei der tan $\delta$ 0,4 oder mehr und 0,6 oder weniger beträgt und die komplexe Viskosität 6500 Pa·s oder mehr und 12000 Pa·s oder weniger beträgt, welche durch die Viskoelastizitätsmessung bei einer Temperatur von 130°C und einer Frequenz von 1,67 Hz ermittelt werden.

3. Das Verfahren nach Anspruch 1, wobei das Vernetzungsverfahren ein Vernetzungsmittel verwendet, um die Harzteilchen auf Polyethylen-Basis in dem wässrigen Dispersionsmedium zu vernetzen.

4. Das Verfahren nach Anspruch 1 oder 3, umfassend das Vernetzungsverfahren für die Harzteilchen auf Polyethylen-Basis vor der ersten Stufe des Schäumungsverfahrens.

5. Das Verfahren nach einem der Ansprüche 1 bis 4, wobei ein absoluter Wert einer Differenz des Schmelzpunktes zwischen dem Harz auf Polyethylen-Basis als das Grundharz der Harzteilchen auf Polyethylen-Basis und den vernetzten Harzteilchen auf Polyethylen-Basis 2°C oder weniger beträgt, wobei der Schmelzpunkt des Harzes auf Polyethylen-Basis als das Grundharz der Harzteilchen auf Polyethylen-Basis bzw. der Schmelzpunkt der vernetzten Harzteilchen auf Polyethylen-Basis durch Differentialscanningkalorimetrie (DSC) gemäß der Beschreibung ermittelt wird.

6. Das Verfahren nach einem der Ansprüche 1 bis 5, wobei der absolute Wert der Differenz des Schmelzpunktes zwischen dem Harz auf Polyethylen-Basis als Grundharz der Harzteilchen auf Polyethylen-Basis und den vernetzten Harzteilchen auf Polyethylen-Basis 1°C oder weniger beträgt, wobei der Schmelzpunkt des Harzes auf Polyethylen-Basis als das Grundharz der Harzteilchen auf Polyethylen-Basis bzw. der Schmelzpunkt der vernetzten Harzteilchen auf Polyethylen-Basis durch Differentialscanningkalorimetrie (DSC) gemäß der Beschreibung ermittelt wird.

7. Das Verfahren nach einem der Ansprüche 1 bis 6, wobei das Harz auf Polyethylen-Basis als das Grundharz der Harzteilchen auf Polyethylen-Basis einen Schmelzindex von 0,2 g/10 min oder mehr und weniger als 2,0 g/10 min aufweist, wobei der Schmelzindex ein Wert ist, der gemäß JIS K 7210 unter der Bedingung gemessen wird, dass die Temperatur 190°C beträgt und die Last 2,16 kg beträgt.

8. Das Verfahren nach einem der Ansprüche 1 bis 7, wobei das Harz auf Polyethylen-Basis als das Grundharz der Harzteilchen auf Polyethylen-Basis eine Dichte von 0,920 g/cm$^3$ oder mehr und 0,932 g/cm$^3$ oder weniger aufweist.

9. Das Verfahren nach einem der Ansprüche 1 bis 8, wobei die geschäumten Harzteilchen auf Polyethylen-Basis einen Schmelzpunkt von 113°C oder mehr und 117°C oder weniger aufweisen, wobei der Schmelzpunkt der geschäumten Harzteilchen auf Polyethylen-Basis durch Differentialscanningkalorimetrie (DSC) gemäß der Beschreibung ermittelt wird.

10. Das Verfahren nach einem der Ansprüche 1 bis 9, umfassend eine zweite Stufe des Schäumungsverfahrens nach der ersten Stufe des Schäumungsverfahrens, wobei die zweite Stufe des Schäumungsverfahrens Einbringen der geschäumten Harzteilchen auf Polyethylen-Basis, die in der ersten Stufe des Schäumungsverfahrens erhalten wurden, in einen Druckbehälter, Imprägnieren der geschäumten Harzteilchen auf Polyethylen-Basis mit anorganischem Gas, das mindestens ein Gas, ausgewählt aus der Gruppe bestehend aus Luft, Stickstoff und Kohlendioxid, enthält, um Innendruck aufzubringen, und dann Erhitzen und weiteres Schäumen der geschäumten Harzteilchen auf Polyethylen-Basis beinhaltet.

11. Ein Verfahren zur Herstellung eines in-mold-geschäumten Formgegenstandes aus Harz auf Polyethylen-Basis, wobei das Verfahren umfasst:

Füllen der durch das Verfahren nach einem der Ansprüche 1 bis 10 erhaltenen geschäumten Harzteilchen auf Polyethylen-Basis in eine Form; und
Formgebung der geschäumten Harzteilchen auf Polyethylen-Basis durch In-Mold-Schäumen.

12. Das Verfahren nach Anspruch 11, umfassend:

Einbringen der geschäumten Harzteilchen auf Polyethylen-Basis in einen Druckbehälter;
Imprägnieren der geschäumten Harzteilchen auf Polyethylen-Basis mit anorganischem Gas, das mindestens ein Gas, ausgewählt aus der Gruppe bestehend aus Luft, Stickstoff und Kohlendioxid, enthält, um Innendruck aufzubringen; und dann Formgebung der geschäumten Harzteilchen auf Polyethylen-Basis durch In-Mold-Schäumen.

13. Das Verfahren nach Anspruch 11 oder 12, wobei der in-mold-geschäumte Formgegenstand aus Harz auf Polyethylen-Basis eine Dichte von 20 g/l oder mehr und 35 g/l oder weniger und eine Wasserabsorptionsmenge von 0,15 g/100 cm$^3$ oder weniger aufweist, wobei die Wasserabsorptionsmenge gemäß der Beschreibung gemessen wird.

14. Das Verfahren nach einem der Ansprüche 11 bis 13, wobei der in-mold-geschäumte Formgegenstand aus Harz auf Polyethylen-Basis eine Mehrwegschachtel ist.

**Revendications**

1. Méthode pour produire des particules expansées en résine à base de polyéthylène par expansion de particules en résine à base de polyéthylène contenant une résine à base de polyéthylène en tant que résine de base, dans laquelle

les particules en résine à base de polyéthylène sont réticulées par un procédé de réticulation,
les particules en résine à base de polyéthylène réticulées ont un point de fusion de 105°C ou plus et 125°C ou moins, et
les particules en résine à base de polyéthylène ont une valeur tan δ de 0,3 ou plus et 0,7 ou moins et une viscosité complexe de 5 000 Pa·s ou plus et 20 000 Pa·s ou moins, qui sont déterminées par une mesure de viscoélasticité à une température de 130°C et à une fréquence de 1,67 Hz,
la méthode comprenant un procédé d'expansion de première étape,
le procédé d'expansion de première étape comprenant la dispersion des particules en résine à base de polyéthylène dans un milieu de dispersion aqueux dans un récipient scellé, l'addition d'un agent d'expansion contenant du dioxyde de carbone à la dispersion aqueuse ainsi préparée, le chauffage et la pressurisation de la dispersion aqueuse, et ensuite la libération de la dispersion aqueuse jusqu'à une région de pression où la pression est inférieure à la pression interne du récipient scellé,
dans laquelle le rapport d'expansion dans le procédé d'expansion de première étape est de 10 fois ou plus et 18 fois ou moins,

dans laquelle le point de fusion des particules en résine à base de polyéthylène réticulées est déterminé par calorimétrie à balayage différentiel (DSC) conformément à la description.

2. Méthode selon la revendication 1, dans laquelle la valeur tan $\delta$ est de 0,4 ou plus et 0,6 ou moins et la viscosité complexe est de 6 500 Pa·s ou plus et 12 000 Pa·s ou moins, qui sont déterminées par une mesure de viscoélasticité à une température de 130°C et à une fréquence de 1,67 Hz.

3. Méthode selon la revendication 1, dans laquelle le procédé de réticulation utilise un agent de réticulation pour réticuler les particules en résine à base de polyéthylène dans le milieu de dispersion aqueux.

4. Méthode selon la revendication 1 ou 3, comprenant le procédé de réticulation des particules en résine à base de polyéthylène avant le procédé d'expansion de première étape.

5. Méthode selon l'une quelconque des revendications 1 à 4, dans laquelle la valeur absolue de la différence de point de fusion entre la résine à base de polyéthylène comme résine de base des particules en résine à base de polyéthylène et les particules en résine à base de polyéthylène réticulées est de 2°C ou moins,

dans laquelle le point de fusion de la résine à base de polyéthylène comme résine de base des particules en résine à base de polyéthylène et le point de fusion des particules en résine à base de polyéthylène réticulées sont déterminés par calorimétrie à balayage différentiel (DSC) conformément à la description, respectivement.

6. Méthode selon l'une quelconque des revendications 1 à 5, dans laquelle la valeur absolue de la différence de point de fusion entre la résine à base de polyéthylène comme résine de base des particules en résine à base de polyéthylène et les particules en résine à base de polyéthylène réticulées est de 1°C ou moins,

dans laquelle le point de fusion de la résine à base de polyéthylène comme résine de base des particules en résine à base de polyéthylène et le point de fusion des particules en résine à base de polyéthylène réticulées sont déterminés par calorimétrie à balayage différentiel (DSC) conformément à la description, respectivement.

7. Méthode selon l'une quelconque des revendications 1 à 6, dans laquelle la résine à base de polyéthylène comme résine de base des particules en résine à base de polyéthylène a un indice de fluidité de 0,2 g/10 min ou plus et inférieur à 2,0 g/10 min,

dans laquelle l'indice de fluidité est une valeur mesurée conformément à la norme JIS K 7210 dans des conditions de température de 190°C et de charge de 2,16 kg.

8. Méthode selon l'une quelconque des revendications 1 à 7, dans laquelle la résine à base de polyéthylène comme résine de base des particules en résine à base de polyéthylène a une masse volumique de 0,920 g/cm$^3$ ou plus et 0,932 g/cm$^3$ ou moins.

9. Méthode selon l'une quelconque des revendications 1 à 8, dans laquelle les particules expansées en résine à base de polyéthylène ont un point de fusion de 113°C ou plus et 117°C ou moins,

dans laquelle le point de fusion des particules expansées en résine à base de polyéthylène est déterminé par calorimétrie à balayage différentiel (DSC) conformément à la description.

10. Méthode selon l'une quelconque des revendications 1 à 9, comprenant un procédé d'expansion de deuxième étape après le procédé d'expansion de première étape,

le procédé d'expansion de deuxième étape comprenant le placement des particules expansées en résine à base de polyéthylène obtenues par le procédé d'expansion de première étape dans un récipient sous pression, l'imprégnation des particules expansées en résine à base de polyéthylène avec un gaz inorganique contenant au moins un gaz choisi dans le groupe constitué par l'air, l'azote et le dioxyde de carbone pour appliquer une pression interne, et ensuite le chauffage et l'expansion supplémentaire des particules expansées en résine à base de polyéthylène.

11. Méthode pour produire une résine à base de polyéthylène dans un produit moulé de mousse dans un moule, la méthode comprenant :

l'introduction dans un moule des particules expansées en résine à base de polyéthylène obtenues par le procédé selon l'une quelconque des revendications 1 à 10 ; et

le moulage des particules expansées en résine à base de polyéthylène par un moulage de mousse dans le moule.

**12.** Méthode selon la revendication 11, comprenant :

le placement des particules expansées en résine à base de polyéthylène dans un récipient sous pression ;
l'imprégnation des particules expansées en résine à base de polyéthylène avec un gaz inorganique contenant au moins un gaz choisi dans le groupe constitué par l'air, l'azote et le dioxyde de carbone pour appliquer une pression interne; et ensuite
le moulage des particules expansées en résine à base de polyéthylène par un moulage de mousse dans un moule.

**13.** Méthode selon la revendication 11 ou 12, dans laquelle le produit moulé de mousse dans un moule en résine à base de polyéthylène a une masse volumique de 20 g/l ou plus et 35 g/l ou moins et une quantité d'absorption d'eau de 0,15 g/100 cm$^3$ ou moins,
dans laquelle la quantité d'absorption d'eau est mesurée conformément à la description.

**14.** Méthode selon l'une quelconque des revendications 11 à 13, dans laquelle le produit moulé de mousse dans un moule en résine à base de polyéthylène est une boîte consignée.

FIG.1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S62198784853 A
- JP S561981151736 A
- JP H41992372630 A
- JP H8199692407 A
- JP 2000017079 A
- JP H61994316645 A
- WO 9718260 A1
- JP H9199725356 A
- JP H111999172034 A
- JP H51993156065 A
- JP H61994192464 A
- JP H61994200071 A
- US 4366263 A
- US 4275023 A
- WO 2015076306 A1